# EUROPEAN PATENT SPECIFICATION

(11) **EP 2 628 760 B1**
(45) Date of publication and mention of the grant of the patent: **01.02.2017**
(21) Application number: 11832572.9
(22) Date of filing: 12.10.2011
(51) Int. Cl.: C08K 3/22, C08K 5/00, C08K 5/01, C08G 65/46, C08G 65/44, C08K 3/00, C08K 3/20, C08K 3/26, C08K 3/34, C08K 3/36, C08K 7/04, C08K 7/14, C08L 71/12, C08J 3/14

(54) **POLYPHENYLENE ETHER POWDER AND POLYPHENYLENE ETHER COMPOSITION**
POLYPHENYLENETHERPULVER UND POLYPHENYLENETHERZUSAMMENSETZUNG
POUDRE DE POLYPHÉNYLÈNE ÉTHER, ET COMPOSITION DE RÉSINE DE POLYPHÉNYLÈNE ÉTHER

(30) Priority: 13.10.2010 JP 2010230775
(43) Date of publication of application: 21.08.2013
(73) Proprietor: ASAHI KASEI KABUSHIKI KAISHA, Tokyo 101-8101 (JP)
(72) Inventor: KONDO, Tomohiro, Tokyo 101-8101 (JP)
(74) Representative: Strehl Schübel-Hopf & Partner
(86) International application number: PCT/JP2011/073445
(87) International publication number: WO 2012/050138

(56) References cited:
- JP-A- H1 112 354
- JP-A- 2000 281 798
- JP-A- 2000 281 799
- JP-A- 2004 136 643
- JP-A- 2009 275 208
- JP-A- 2010 189 548
- JP-A- 2010 189 548
- JP-A- 2010 241 876
- US-A1- 2007 106 000

## Description

### Technical Field

The present invention relates to a polyphenylene ether powder and a polyphenylene ether resin composition.

### Background Art

An advantage of polyphenylene ether is that because of its excellent processability and productivity, products or components with desired shapes can be efficiently produced by molding methods such as a melt injection molding or melt extrusion. Utilizing such advantages, polyphenylene ether is widely used as a material for components in the fields of electric and electronic materials, automobiles, various types of industrial materials, and food product wrappings.

Recently, as new industrial applications for polyphenylene ether, applications have been investigated as a composite material for obtaining excellent properties in combination with another resin, as an electronic material, or for coating surfaces, for example. It has been considered that for these applications a low molecular weight polyphenylene ether would be more effective than conventionally known polyphenylene ethers. Especially, for applications in which the surface of an inorganic object, such as metal, glass, or metal oxide, or an organic object, such as wood or resin is covered with a resin composition formed by dissolving polyphenylene ether in an aromatic organic solvent such as benzene or toluene by coating or applying, in addition to efficiently dissolving the polyphenylene ether, it is important that the resin composition has excellent adhesive properties to the covered surface and mechanical strength. Accordingly, a polyphenylene ether that satisfies both of these properties is needed. Generally, polyphenylene ethers have a higher solubility in a solvent the lower their molecular weight is, and can satisfy mechanical strength the higher their molecular weight is.

Patent Document 1 discloses a method for recovering a granule-like polymer from an aqueous slurry that includes a polymer and an organic solvent as a method for separating various polymers from an organic solvent. A high apparent specific gravity (0.15 to 0.60 g/cc) can be obtained when polycarbonate is used as the polymer. Further, in the example (Example 5) using polyphenylene ether, it has been stated that the apparent specific gravity of the polymer obtained is 0.30 g/cc.

Patent Documents 2 and 3 disclose a method for producing polyphenylene ether resin granules having a uniform average particle size. Specifically, Patent Documents 2 and 3 disclose that a solid polyphenylene ether resin having an average particle size of 0.2 to 2 mm and a bulk specific gravity of 0.3 to 0.6 g/cc is obtained after drying by adding a polyphenylene ether polymerization reaction solution into water to form an aqueous dispersion (a slurry solution including polyphenylene ether precipitate and water), and when forming granules by stirring this aqueous dispersion or by removing the solvent by heating while circulating the aqueous dispersion, milling the granules by circulating at least a part of the aqueous dispersion through a wet milling machine. However, in the Examples of these publications, only polyphenylene ether having a bulk specific gravity of at maximum 0.39 g/cc, is obtained.

Further examples include a low molecular weight polyphenylene ether that aims to increase or modify solvent solubility (e.g., refer to Patent Documents 4 and 5), and a high molecular weight polyphenylene ether that aims to increase gas barrier properties (e.g., refer to Patent Document 6).

In addition, for example, polyphenylene ethers that have an improved fluidity by mixing a low molecular weight polyphenylene ether and a high molecular weight polyphenylene ether have also been proposed (e.g., refer to Patent Documents 7 to 9).

Patent Document 9 proposes a method for continuously producing polyphenylene ether that has a bimodal molecular weight distribution by mixing polyphenylene ether having a reduced viscosity of 0.4 to 3.0 dl/g polymerized by a main polymerization line and polyphenylene ether having a reduced viscosity of 0.05 to 0.6 dl/g that bypasses the main polymerization line. This method enables the continuous production of polyphenylene ether having a low viscosity, which had been difficult based on slurry polymerization.

On the other hand, since impurities such as gels can also be produced during melt processing, there is a need for technology to suppress these gels and for development of additives.

As a method for producing a comparatively low molecular weight polyphenylene ether, a technology has been proposed for varying the molecular weight of polyphenylene ether by adding 2,4,6-trimethylphenol during the polyphenylene ether polymerization process, and controlling the amount added (e.g., refer to Patent Document 10).

Further, Patent Document 10 describes obtaining polyphenylene ethers having various molecular weights by using as a solvent a mixed solvent of a good solvent for polyphenylene ether (e.g., benzene, toluene, or xylene) and a poor solvent for polyphenylene ether (e.g., a ketone, an ether, or an alcohol), and changing the ratio of good solvent/poor solvent.

Further, a method has been disclosed for performing polyphenylene ether polymerization in a mixed solvent of an aromatic hydrocarbon (e.g., benzene, toluene, or xylene), which is a good solvent for polyphenylene ether, and an aliphatic hydrocarbon (e.g., n-hexane, isohexane, or n-heptane), which is a poor solvent for polyphenylene ether (e.g., refer to Patent Document 11).

### Citation List

### Patent Document

Patent Document 1: U.S. Patent No. 4,603,194
Patent Document 2: Japanese Patent Laid-Open No. 2000-281799
Patent Document 3: Japanese Patent Laid-Open No. 2000-281798
Patent Document 4: U.S. Patent Application Publication No. 2003/0130438
Patent Document 5: Japanese Patent Laid-Open No. 2004-99824
Patent Document 6: International Publication No. WO2002/12370
Patent Document 7: U.S. Patent Publication No. 2003/23006
Patent Document 8: GB Patent No. EP0401690
Patent Document 9: Japanese Patent Laid-Open No. 11-012354
Patent Document 10: U.S. Patent No. 3,440,217
Patent Document 11: Japanese Patent Publication No. 50-6520

Japanese document JP 2010 189548 A discloses a polyphenylene ether powder, and process thereto, having a high density wherein a low molecular weight polyphenylene ether and a high molecular weight polyphenylene ether are present.

### Summary of Invention

### Problems To Be Solved By The Invention

Polyphenylene ether can often be obtained as a powder, which can lead to problems with handleability. Especially when dissolving a polyphenylene ether powder in a solvent, problems with solvent solubility often arise. The solvent solubility of a polyphenylene ether powder is greatly influenced by its loose apparent specific gravity. Generally, it is known that polyphenylene ether powders having a low loose apparent specific gravity have good solvent solubility, because the solvent tends to easily penetrate into the particles due to the particles having a porous shape.

However, an drawback of a polyphenylene ether powder having a low loose apparent specific gravity is that when injecting it into a container during dissolution in a solvent, for example, efficient charging is difficult due to the low loose apparent specific gravity. Further, a polyphenylene ether powder having a low loose apparent specific gravity is also well known to have poor handleability, such as transportability during transport.

On the other hand, the solvent solubility of polyphenylene ether powders is also greatly influenced by the molecular weight distribution. The need for polyphenylene ether powders having high solvent solubility while also having excellent physical properties based on a low molecular weight and a narrow molecular weight distribution is increasing.

However, the polyphenylene ethers described in Patent Documents 1 to 8 do not satisfy all of solvent solubility, adhesive properties of the covered surface, and mechanical strength properties. Further, since Patent Document 1 does not contain any disclosure about the polymerization method regarding the average molecular weight and molecular weight distribution of the polyphenylene ether, these matters are unclear. Moreover, in the examples of Patent Documents 2 and 3, polyphenylene ether having a bulk specific gravity of no more than, at maximum, 0.39 g/cc, is obtained.

Further, generally, in order to obtain good processing fluidity for polyphenylene ether a wide molecular weight distribution is preferred. However, to obtain excellent physical properties, a narrow molecular weight distribution is preferred. Consequently, recently, polyphenylene ethers having a narrow molecular weight distribution have been needed.

Especially, if a polyphenylene ether having a high molecular weight is mixed in a polyphenylene ether having a low molecular weight and a narrow molecular weight distribution, those polymer properties tend to be clearly exhibited.

For example, since uneven speed and uneven concentration tend to occur during dissolution in a solvent, from the perspective of avoiding such defects, there is a need for a polyphenylene ether that has a narrow molecular weight distribution while also having a low molecular weight.

The polyphenylene ether obtained based on the method disclosed in Patent Document 9 has a wide molecular weight distribution, and thus is not entirely satisfactory as a technology for obtaining the polyphenylene ether that has a narrow molecular weight distribution and excellent physical properties that has recently been demanded.

The method disclosed in Patent Document 10 suffers from the problem of lacking precision as a method for obtaining a polymer having the required molecular weight.

A problem of the method disclosed in Patent Literature 11 is that since produced water and amines are present in the reaction system, when the reaction proceeds in such a state, oligophenylene ether particles are unevenly produced, which tend to adhere to the reactor and the like.

Accordingly, it is an object of the present invention to provide a polyphenylene ether powder that has a high loose apparent specific gravity and yet has good handleability, as well as a high solvent solubility, and good covering properties by coating, applying and the like, and further, when formed as a covering film, provides the covering film with excellent mechanical properties.

### Means For Solving The Problems

As a result of diligent research into the above problems, the present inventor discovered that a low molecular weight polyphenylene ether powder, as defined in claim 1, having specific amounts of a component having a predetermined molecular weight or more and a component having a predetermined molecular weight or less surprisingly has better solvent solubility the higher its loose apparent specific gravity is.

As a result of investigating these influencing factors in more detail, the present inventor discovered that a specific polyphenylene ether powder that has a controlled molecular weight as well as a controlled loose apparent specific gravity exhibits good solubility in a solvent, excellent handleability, and good mechanical strength when formed as a covering film.

In addition, to obtain a polyphenylene ether powder having the above-described molecular weight distribution characteristic and loose apparent specific gravity, the present inventor discovered that it is important to control the polymerization conditions, the purification conditions, and the precipitation conditions, and to perform milling, especially milling in a wet state (wet cake state), thereby arriving at the present invention.

Furthermore, it is thought that because in Patent Documents 1 to 3 milling is not carried out in a wet state (wet cake state) like in the present application, only particles having a low bulk specific gravity can be obtained.

Specifically, the present invention is as follows.
[1] A polyphenylene ether powder having a loose apparent specific gravity of 0.40 or more and 0.85 or less, and comprising 5 to 20 mass% of a component having a molecular weight of 50,000 or more and 12 to 30 mass% of a component having a molecular weight of 8,000 or less.
[2] The polyphenylene ether powder according to the above [1], which has a reduced viscosity (ηsp/c) of 0.20 dl/g or more and 0.43 dl/g or less.
[3] A polyphenylene ether resin composition, comprising:
   (a) the polyphenylene ether powder according to the above [1] ; and
   (b) a good solvent for the polyphenylene ether powder.
[4] The polyphenylene ether resin composition according to the above [3], wherein (b) the good solvent is one or more solvents selected from the group consisting of aromatic hydrocarbons, halogenated hydrocarbons, nitro compounds, aliphatic hydrocarbons, and ethers.
[5] The polyphenylene ether resin composition according to the above [3] or [4], wherein a mass ratio ((a)/(b)) of (a) the polyphenylene ether powder to (b) the good solvent is 5/95 to 60/40.
[6] A polyphenylene ether resin composition, comprising:
   (a) the polyphenylene ether powder according to the above [1]; and
   (d) a filler.
[7] The polyphenylene ether resin composition according to the above [6], wherein (d) the filler is one or more fillers selected from the group consisting of glass fibers, metal fibers, inorganic salts, wollastonite, kaolin, talc, calcium carbonate, silica, and titanium oxide.
[8] A method for producing the polyphenylene ether powder according to the above [1] or [2], the method comprising:
   step 1 of obtaining a solution (I) including polyphenylene ether and a good solvent by polymerizing a phenol compound while introducing oxygen in the presence of a catalyst in the good solvent for the polyphenylene ether;
   step 2 of obtaining a solution (II) from the solution (I) obtained in step 1 in which a concentration of the polyphenylene ether has been adjusted to 25 mass% or more and 45 mass% or less;
   step 3 of obtaining a slurry by mixing the solution (II) obtained in step 2 with a poor solvent for the polyphenylene ether and precipitating the polyphenylene ether; and
   step 4 of milling a wet polyphenylene ether obtained by subjecting the slurry obtained in step 3 to solid-liquid separation, wherein
      in step 1, an amount of oxygen introduced is 20 to 30 NL per mol of the phenol compound, and
      in step 3, the polyphenylene ether concentration in the slurry when precipitating the polyphenylene ether is 15 mass% or more and 30 mass% or less.
[9] The method for producing the polyphenylene ether powder according to the above [8], wherein in step 3 a slurry temperature when precipitating the polyphenylene ether is 0°C or more and 70°C or less.

### Advantageous Effects of Invention

According to the present invention, a polyphenylene ether can be obtained that has a high loose apparent specific gravity, good handleability, and a high solvent solubility. Further, according to the polyphenylene ether resin composition of the present invention, a covering film can be obtained that has excellent mechanical properties.

### Modes For Carrying Out The Invention

An embodiment for carrying out the present invention (hereinafter referred to as "present embodiment") will now be described in detail. The following present embodiment is an example for describing the present invention, and the present embodiment is not intended to limit the present invention only to this embodiment. Further, various modifications can be appropriately made to the present invention within the scope of the gist thereof.

### [Polyphenylene Ether Powder]

The polyphenylene ether powder according to the present embodiment has a loose apparent specific gravity of 0.40 or more and 0.85 or less, and includes 5 to 20 mass% of a component having a molecular weight of 50,000 or more and 12 to 30 mass% of a component having a molecular weight of 8,000 or less.

It is preferred that the polyphenylene ether (hereinafter sometimes referred to simply as "PPE") powder according to the present embodiment is a powder of a homopolymer and/or copolymer having a repeating unit structure represented by the following formula (1).

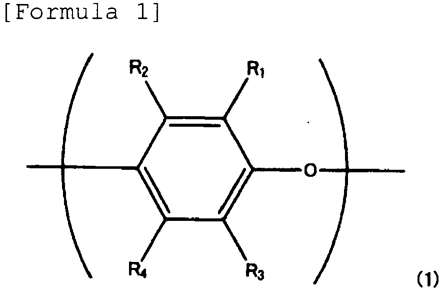

In formula (1), R₁, R₂, R₃, and R₄ are each independently selected from the group consisting of a hydrogen atom, a halogen atom, an alkyl group having 1 to 7 carbon atoms, a phenyl group, a haloalkyl group, an aminoalkyl group, a hydrocarbon oxy group, and a halohydrocarbon oxy group in which a halogen atom is separated from an oxygen atom by at least two carbon atoms.

Examples of the halogen atom represented by R₁, R₂, R₃, and R₄ in formula (1) may include a fluorine atom, a chlorine atom, and a bromine atom. Preferred are a chlorine atom and a bromine atom.

The term "alkyl group" represented by R₁, R₂, R₃, and R₄ in formula (1) represents a straight chain or a branched chain alkyl group preferably having 1 to 6 carbon atoms, and more preferably 1 to 3 carbon atoms. Examples thereof may include methyl, ethyl, propyl, isopropyl, butyl, isobutyl, sec-butyl, tert-butyl, pentyl, and hexyl. Preferred are methyl and ethyl, and more preferred is methyl.

The alkyl group represented by R₁, R₂, R₃, and R₄ in formula (1) may also be substituted with one or two or more substituents at a substitutable position.

Examples of such a substituent may include a halogen atom (e.g., a fluorine atom, a chlorine atom, and a bromine atom), an alkyl group having 1 to 6 carbon atoms (e.g., methyl, ethyl, propyl, isopropyl, butyl, isobutyl, sec-butyl, tert-butyl, pentyl, and hexyl), an aryl group (e.g., phenyl and naphthyl), an alkenyl group (e.g., ethenyl, 1-propenyl, and 2-propenyl), an alkynyl group (e.g., ethynyl, 1-propynyl, and 2-propynyl), an aralkyl group (e.g., benzyl and phenethyl), and an alkoxy group (e.g., methoxy and ethoxy).

The polyphenylene ether powder according to the present embodiment has a loose apparent specific gravity of 0.40 or more and 0.85 or less. It is more preferred that the lower limit for the loose apparent specific gravity is 0.45 or more, even more preferable is 0.48 or more, and especially preferable is 0.5 or more. It is more preferred that the upper limit for the loose apparent specific gravity is 0.85 or less, even more preferable is 0.70 or less, and especially preferable is 0.60 or less.

If the loose apparent specific gravity of the polyphenylene ether powder is 0.85 or less, solubility in the solvent is excellent, as the polyphenylene ether powder can be uniformly dispersed when dissolving in the solvent without settling down into the solvent due to swelling of the polyphenylene ether powder by the solvent.

Further, if the loose apparent specific gravity of the polyphenylene ether powder is 0.40 or more, the polyphenylene ether powder can be uniformly dispersed in the solvent without forming so-called "lumps" when dissolving in the solvent. Consequently, the polyphenylene ether powder can be dissolved in the solvent in a short time, the transport efficiency when transporting the polyphenylene ether powder packed in a container is excellent, and the measurability and handleability of the polyphenylene ether powder during handling are excellent.

A polyphenylene ether powder having a loose apparent specific gravity and a molecular weight distribution in the above-described ranges can be obtained by, in the method for producing the polyphenylene ether powder according to the present embodiment, for example, controlling the polymerization conditions, the purification conditions, and the precipitation conditions, and milling, especially milling in a wet state (wet cake state).

In the present embodiment, the loose apparent specific gravity is a value measured by the method described in the below-described Examples.

By setting the amount of the component having a molecular weight of 8,000 or less and the amount of the component having a molecular weight of 50,000 or more to specific ranges, the polyphenylene ether powder according to the present embodiment has good solubility in a solvent and high mechanical strength. Specifically, from the perspective of good solubility in the solvent, the content of the component having a molecular weight of 50,000 or more is 5 to 20 mass%, and preferably 5 to 18 mass%, based on the total of the polyphenylene ether powder. From the perspective of mechanical properties, the content of the component having a molecular weight of 8,000 or less is 12 to 30 mass%, and preferably 15 to 30 mass%, based on the total of the polyphenylene ether powder.

In the method for producing the polyphenylene ether powder according to the present embodiment, for example, by controlling the polymerization time, the aeration rate of oxygen-containing gas, the aeration time of oxygen-containing gas, whether to add extra raw materials, the addition time of extra raw materials, the amount of the catalyst to be used, the monomer amount, the solvent composition and the like, the component having a molecular weight of 50,000 or more can be controlled to the above-described specific amount, and the component having a molecular weight of 8,000 or less can also be controlled to the above-described specific amount.

After the polyphenylene ether powder is produced, if, for example, the polyphenylene ether powder includes more than 30 mass% or less than 12 mass% of the polyphenylene ether powder having a molecular weight of 8,000 or less, or if the polyphenylene ether powder includes more than 20 mass% or less than 5 mass% of the polyphenylene ether powder having a molecular weight of 50,000 or more, the molecular weight can be adjusted based on the following methods.

Examples of methods that can be applied may include isolating the polyphenylene ether powder by dissolving in a good solvent and then reprecipitating with a poor solvent, and washing with a mixed solvent of a good solvent and a poor solvent.

Although these methods can be used as a method for adjusting the molecular weight of the polyphenylene ether powder since molecular weight can be adjusted based on the treatment temperature, there is a high likelihood that the yield will deteriorate due to polymer loss caused by the reduction in unnecessary components. Consequently, from the perspective of efficiently producing the polyphenylene ether powder, it is preferred to use the method for producing the polyphenylene ether powder according to the present embodiment at the polymerization stage instead of the method for adjusting the molecular weight.

Conventionally, for a normal molecular weight type, a generally used polyphenylene ether includes about 40 mass% of the component having a molecular weight of 50,000 or more, and even in a so-called low molecular weight type, about 25 mass% of such component. On the other hand, for a normal molecular weight type or a low molecular weight type, a polyphenylene ether includes about 3 to 10 mass% of the component having a molecular weight of 8,000 or less. The polyphenylene ether powder according to the present embodiment is a low molecular weight type polyphenylene ether powder that is different from these polyphenylene ethers.

The information relating to the molecular weight of the polyphenylene ether powder according to the present embodiment can be obtained based on measurement using a gel permeation chromatography measurement apparatus. As the specific measurement conditions for the gel permeation chromatography, a calibration curve of standard polystyrene (standard polystyrene molecular weights of 3,650,000, 2,170,000 1,090,000, 681,000, 204,000, 52,000, 30,200, 13,800, 3,360, 1,300, and 550) may be drawn using the Gel Permeation Chromatography System 21 manufactured by Showa Denko K.K. (column: two K-805L columns manufactured by Showa Denko K.K. in series, column temperature: 40°C, solvent: chloroform, solvent flow rate: 1.0 ml/min, sample concentration: solution of polyphenylene ether in 1 g/L chloroform).

The UV wavelength of the detection unit can be selected as, for standard polystyrene, 254 nm, and for polyphenylene ether, 283 nm.

It is preferred that the number average molecular weight (Mn) of the polyphenylene ether powder according to the present embodiment is 7,000 or more and 15,000 or less. A more preferred lower limit is 8,000 or more, and an even more preferred lower limit is 9,000 or more. A more preferred upper limit is 14,000 or less, and an even more preferred upper limit is 13,000 or less. From the perspective of exhibiting mechanical properties, it is preferred that the lower limit for the number average molecular weight is 7,000 or more. From the perspective of obtaining excellent solvent solubility, it is preferred that the upper limit for the number average molecular weight is 15,000 or less.

The polyphenylene ether represented by the above formula (1) can be produced by polymerizing the following phenol compounds.

Examples of the phenol compound may include o-cresol, 2,6-dimethylphenol, 2-ethylphenol, 2-methyl-6-ethylphenol, 2,6-diethyl phenol, 2-n-propylphenol, 2-ethyl-6-n-propylphenol, 2-methyl-6-chlorophenol, 2-methyl-6-bromophenol, 2-methyl-6-isopropylphenol, 2-methyl-6-n-propylphenol, 2-ethyl-6-bromophenol, 2-methyl-6-n-butylphenol, 2,6-di-n-propylphenol, 2-ethyl-6-chlorophenol, 2-methyl-6-phenylphenol, 2-phenylphenol, 2,6-diphenylphenol, 2,6-bis-(4-fluorophenyl)phenol, 2-methyl-6-tolyl phenol, 2,6-ditolylphenol, 2,5-dimethylphenol, 2,3,6-trimethylphenol, 2,5-diethylphenol, 2-methyl-5-ethylphenol, 2-ethyl-5-methylphenol, 2-allyl-5-methylphenol, 2,5-diallylphenol, 2,3-diethyl-6-n-propylphenol, 2-methyl-5-chlorophenol, 2-methyl-5-bromophenol, 2-methyl-5-isopropylphenol, 2-methyl-5-n-propylphenol, 2-ethyl-5-bromophenol, 2-methyl-5-n-butylphenol, 2,5-di-n-propylphenol, 2-ethyl-5-chlorophenol, 2-methyl-5-phenylphenol, 2,5-diphenylphenol, 2,5-bis-(4-fluorophenyl)phenol, 2-methyl-5-tolyl phenol, 2,5-ditolylphenol, 2,6-dimethyl-3-allylphenol, 2,3,6-triallylphenol, 2,3,6-tributylphenol, 2,6-di-n-butyl-3-methylphenol, 2,6-di-t-butyl-3-methylphenol, 2,6-dimethyl-3-n-butylphenol, 2,6-dimethyl-3-t-butylphenol.

Especially, since they are inexpensive and can be easily obtained, preferred are 2,6-dimethylphenol, 2,6-diethylphenol, 2,6-diphenylphenol, 2,3,6-trimethylphenol, and 2,5-dimethylphenol. More preferred are 2,6-dimethylphenol and 2,3,6-trimethylphenol.

The above phenol compounds can be used singly or in combinations of two or more thereof.

Examples of the above combination may include a method in which 2,6-dimethylphenol and 2,6-diethylphenol are used in combination, a method in which 2,6-dimethylphenol and 2,6-diphenylphenol are used in combination, a method in which 2,3,6-trimethylphenol and 2,5-dimethylphenol are used in combination, and a method in which 2,6-dimethylphenol and 2,3,6-trimethylphenol are used in combination. The mixing ratio can be arbitrarily selected. Further, a small amount of m-cresol, p-cresol, 2,4-dimethylphenol, 2,4,6-trimethylphenol and the like included as byproducts during production may be included in the phenol compound that is used.

In addition to the above-described phenol compounds, the used compound may also include a dihydric phenol compound represented by the following formula (2). A dihydric phenol compound like that represented by the following formula (2) can be advantageously industrially produced by reacting a corresponding monohydric phenol compound with a ketone or a dihalogenated aliphatic hydrocarbon, reacting corresponding monohydric phenol compounds with each other and the like. Examples of such compounds may include compounds obtained by reacting a monohydric phenol compound with a general ketone compound, such as formaldehyde, acetone, methyl ethyl ketone, methyl isobutyl ketone, acetophenone, and cyclohexane, and compounds obtained by reacting monohydric phenol compounds with each other. Such examples thereof may include the compounds represented by the following general formulae (2-a), (2-b), and (2-c).

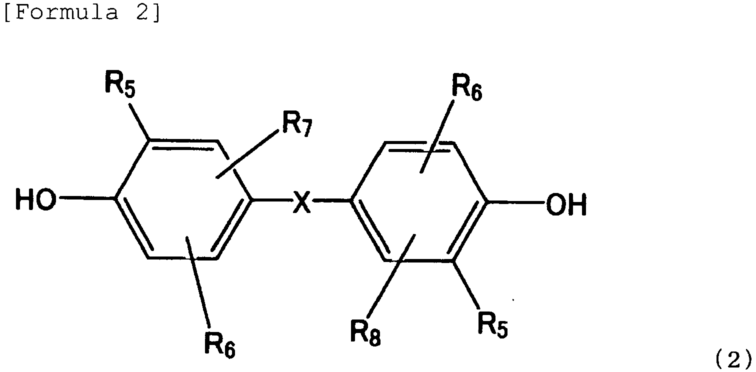

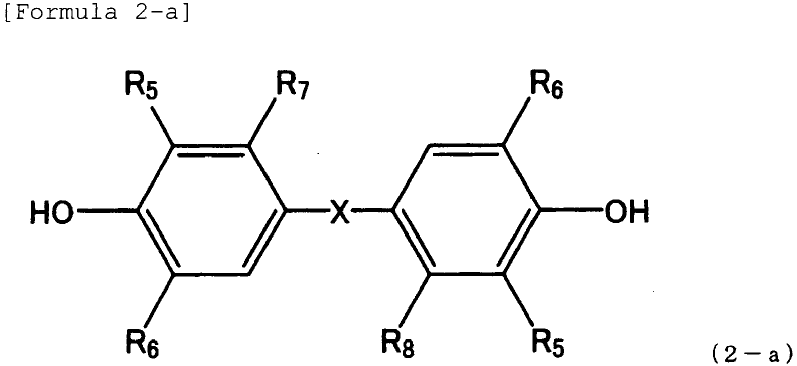

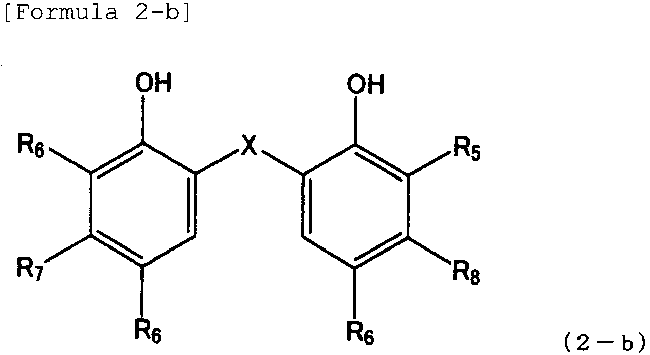

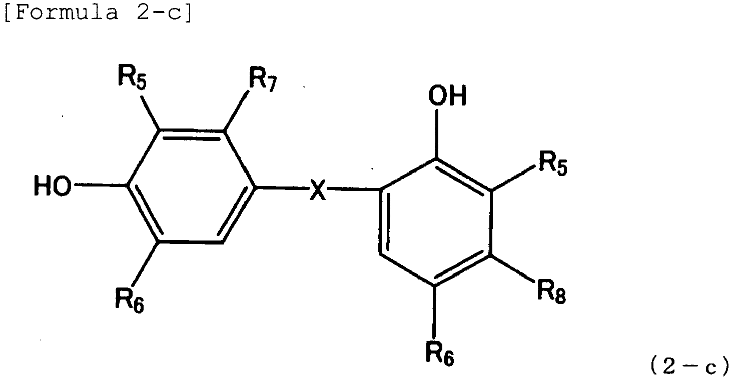

Representative compounds represented by the above formulae may include, but are not limited to, compounds in which R₅ and R₆ are a methyl group, R₇ and R₈ are hydrogen, and X is directly bonded to both aryl groups, compounds in which R₅ and R₆ are a methyl group, R₇ and R₈ are hydrogen, and X is methylene, compounds in which R₅ and R₆ are a methyl group, R₇ and R₈ are hydrogen, and X is thio, compounds in which R₅, R₆, and R₇ are a methyl group, R₈ is hydrogen, and X is ethylene, compounds in which R₅ and R₆ are a methyl group, R₇ and R₈ are hydrogen, and X is isopropylidene, compounds in which R₅ and R₆ are a methyl group, R₇ and R₈ are hydrogen, and X is cyclohexylidene, compounds in which R₅, R₆, and R₇ are a methyl group, R₈ is hydrogen, and X is directly bonded to both aryl groups, compounds in which R₅, R₆, and R₇ are a methyl group, R₈ is hydrogen, and X is methylene, compounds in which R₅, R₆, and R₇ are a methyl group, R₈ is hydrogen, and X is ethylene, compounds in which R₅, R₆, and R₇ are a methyl group, R₈ is hydrogen, and X is thio, compounds in which R₅, R₆, and R₇ are a methyl group, R₈ is hydrogen, and X is isopropylidene, compounds in which R₅, R₆, R₇, and R₈ are a methyl group and X is methylene, compounds in which R₅, R₆, R₇, and R₈ are a methyl group and X is ethylene, and compounds in which R₅, R₆, R₇, and R₈ are a methyl group and X is isopropylidene.

In addition to the above-described phenol compounds, a polyhydric phenol compound may also be included. Examples of such a polyhydric phenol compound may include compounds having three or more to less than nine phenolic hydroxyl groups per molecule, wherein at least one of those phenolic hydroxyl groups has an alkyl group or an alkylene group at the 2 and 6 positions. Examples of the polyhydric phenol compound may include, but are not limited to, the following: 4,4'-[(3-hydroxyphenyl)methylene]bis(2,6-dimethylphenol), 4,4'-[(3-hydroxyphenyl)methylene]bis(2,3,6-trimethylphenol), 4,4'-[(4-hydroxyphenyl)methylene]bis(2,6-dimethylphenol), 4,4'-[(4-hydroxyphenyl)methylene]bis(2,3,6-trimethylphenol), 4,4'-[(2-hydroxy-3-methoxyphenyl)methylene]bis(2,6-dimethylphenol), 4,4'-[(4-hydroxy-3-ethoxyphenyl)methylene]bis(2,3,6-trimethylethylphenol), 4,4'-[(3,4-dihydroxyphenyl)methylene]bis(2,6-dimethylphenol), 4,4'-[(3,4-dihydroxyphenyl)methylene]bis(2,3,6-trimethylphenol), 2,2'-[(4-hydroxyphenyl)methylene]bis(3,5,6-trimethylphenol), 4,4'-[4-(4-hydroxyphenyl)cyclohexylidene]bis(2,6-dimethylphenol), 4,4'-[(2-hydroxyphenyl)methylene]-bis(2,3,6-trimethylphenol), 4,4'-[1-[4-[1-(4-hydroxy-3,5-dimethylphenyl)-1-methylethyl]phenyl]ethylidene]bis(2,6-dimethylphenol), 4,4'-[1-[4-[1-(4-hydroxy-3-fluorophenyl)-1-methylethyl]phenyl]ethylidene]bis(2,6-dimethylphenol), 2,6-bis[(4-hydroxy-3,5-dimethylphenyl)ethyl]-4-methylphenol, 2,6-bis[(4-hydroxy-2,3,6-trimethylphenyl)methyl]-4-methylphenol, 2,6-bis[(4-hydroxy-3,5,6-trimethylphenyl)methyl]-4-ethylphenol, 2,4-bis[(4-hydroxy-3-methylphenyl)methyl]-6-methylphenol, 2,6-bis[(4-hydroxy-3-methylphenyl)methyl]-4-methylphenol, 2,4-bis[(4-hydroxy-3-cyclohexylphenyl)methyl]-6-methylphenol, 2,4-bis[(4-hydroxy-3-methylphenyl)methyl]-6-cyclohexylphenol, 2,4-bis[(2-hydroxy-5-methylphenyl)methyl]-6-cyclohexylphenol, 2,4-bis[(4-hydroxy-2,3,6-trimethylphenyl)methyl]-6-cyclohexylphenol, 3,6-bis[(4-hydroxy-3,5-dimethylphenyl)methyl]-1,2-benzenediol, 4,6-bis[(4-hydroxy-3,5-dimethylphenyl)methyl]-1,3-benzenediol, 2,4,6-tris[(4-hydroxy-3,5-dimethylphenyl)methyl]-1,3-benzenediol, 2,4,6-tris[(2-hydroxy-3,5-dimethylphenyl)methyl]-1,3-benzenediol, 2,2'-methylene bis[6-[(4/2-hydroxy-2,5/3,6-dimethylphenyl)methyl]-4-methylphenol], 2,2'-methylene bis[6-[(4-hydroxy-3,5-dimethylphenyl)methyl]-4-methylphenol], 2,2'-methylene bis[6-[(4/2-hydroxy-2,3,5/3,4,6-trimethylphenyl)methyl]-4-methylphenol], 2,2'-methylene bis[6-[(4-hydroxy-2,3,5-trimethylphenyl)methyl]-4-methylphenol], 4,4'-methylene bis[2-[(2,4-dihydroxyphenyl)methyl]-6-methylphenol], 4,4'-methylene bis[2-[(2,4-dihydroxyphenyl)methyl]-3,6-dimethylphenol], 4,4'-methylene bis[2-[(2,4-dihydroxy-3-methylphenyl)methyl]-3,6-dimethylphenol], 4,4'-methylene bis[2-[(2,3,4-trihydroxyphenyl)methyl]-3,6-dimethylphenol], 6,6'-methylene bis[4-[(4-hydroxy-3,5-dimethylphenyl)methyl]-1,2,3-benzenetriol], 4,4'-cyclohexylidene bis[2-cyclohexyl-6-[(2-hydroxy-5-methylphenyl)methyl]phenol], 4,4'-cyclohexylidene bis[2-cyclohexyl-6-[(4-hydroxy-3,5-dimethylphenyl)methyl]phenol], 4,4'-cyclohexylidene bis[2-cyclohexyl-6-[(4-hydroxy-2-methyl-5-cyclohexylphenyl)methyl]phenol], 4,4'-cyclohexylidene bis[2-cyclohexyl-6-[(2,3,4-trihydroxyphenyl)methyl]phenol], 4,4',4 ',4'''-(1,2-ethanediylidene)tetrakis(2,6-dimethylphenol), 4,4',4'',4'''-(1,4-phenylenedimethylidene)tetrakis(2,6-dimethylphenol). Although the number of phenolic hydroxyl groups is not especially limited as long as there is 3 or more phenolic hydroxyl groups, the more groups there is the more difficult it becomes to control polymerization, which makes it more difficult to obtain a polyphenylene ether powder having excellent solvent solubility. Therefore, the number of phenolic hydroxyl groups is preferably 3 to 6, and is more preferably 3 or 4. Further, it is preferred that the alkyl group or alkylene group at the 2 and 6 positions is a methyl group. The most preferred polyhydric phenol compounds are 4,4'-[(4-hydroxyphenyl)methylene]bis(2,6-dimethylphenol), 4,4'-[(3-hydroxyphenyl)methylene]bis(2,6-dimethylphenol), 4,4'-[(4-hydroxyphenyl)methylene]bis(2,3,6-trimethylphenol), 4,4'-[(3-hydroxyphenyl)methylene]bis(2,3,6-trimethylphenol), and 4,4',4",4"'-(1,4-phenylenedimethylidene)tetrakis(2,6-dimethylphenol).

From the perspectives of excellent solubility, excellent covering properties, and mechanical properties, it is preferred that the polyphenylene ether powder according to the present embodiment has a reduced viscosity (measured in 0.5 dl/g chloroform solution at 30°C) in the range of 0.20 to 0.43 dl/g, more preferably in the range of 0.23 to 0.40 dl/g, and even more preferably in the range of 0.25 to 0.38 dl/g.

Although the polyphenylene ether powder according to the present embodiment may be a blend of polyphenylene ether powders having two or more different reduced viscosities, this is not for the purpose of widening the molecular weight distribution as in the prior art. For example, although the polyphenylene ether powder may be a mixture of a polyphenylene ether powder having a reduced viscosity of 0.40 dl/g or less and a polyphenylene ether powder having a reduced viscosity of 0.45 dl/g or more, it is preferred that the reduced viscosity of such a mixture is in the range of 0.20 to 0.43 dl/g.

### [Polyphenylene Ether Powder Production Method]

The polyphenylene ether powder according to the present embodiment can be produced by, for example, two production methods, a precipitation polymerization method or a solution polymerization method. A precipitation polymerization method is a form of polymerization in which polyphenylene ether having a predetermined molecular weight is precipitated. In a precipitation polymerization method, as the polymerization of the polyphenylene ether proceeds, the polyphenylene ether product that has reached a molecular weight that is determined based on the solvent composition and the like precipitates, while the materials having a molecular weight less than the determined molecular weight remain in a dissolved state. As the solvent, a mixed solvent of a good solvent for polyphenylene ether, such as toluene, xylene, and ethylbenzene, and a poor solvent, such as methanol and butanol is used. Since precipitated polyphenylene ether has a slower rate of polymerization reaction, in theory, the obtained polyphenylene ether has a narrower molecular weight distribution. Further, since the polyphenylene ether is precipitated while polymerization is proceeding, the viscosity in the system gradually decreases, so that the monomer concentration (phenol compound concentration) during polymerization can be increased. In addition, since the precipitated polyphenylene ether can be easily extracted by filtration, the polyphenylene ether powder can be obtained based on a very simple process.

On the other hand, a solution polymerization method is a polymerization method in which polymerization is carried out in a good solvent for polyphenylene ether, so that a precipitate is not formed during the polymerization. Since all the polyphenylene ether molecules are in a dissolved state, the molecular weight distribution tends to widen. In a solution polymerization method, polyphenylene ether can be obtained in powder form by, in a subsequent step, mixing the polymer solution in which the polyphenylene ether is dissolved with a poor solvent for polyphenylene ether, such as methanol.

From the perspective of efficiently producing the polyphenylene ether powder and the perspective of producing a polyphenylene ether powder having a specific molecular weight distribution, it is preferred that the monomer concentration is, based on the total amount of the polymer solution, 10 to 30 mass%, more preferably 10 to 28 mass%, and even more preferably 13 to 25 mass%. If this concentration is 10 mass% or more, the production efficiency of the polyphenylene ether powder can be increased.

On the other hand, if this concentration is 30 mass% or less, it tends to be easier to adjust the molecular weight to a specific value. The reason for this is thought by the inventor to be as follows. When this concentration is 30 mass% or less, the increase in the solution viscosity when polymerization finishes can be suppressed, so that uniform stirring is easier. Therefore, there are no heterogeneous reactions, and there are few instances in which a polyphenylene ether powder having an unexpected molecular weight is obtained. Consequently, it is easier to efficiently produce the polyphenylene ether powder having a specific molecular weight according to the present embodiment.

In the polymerization step of the polyphenylene ether powder according to the present embodiment, for both precipitation polymerization and solution polymerization, it is preferred to perform the polymerization while supplying an oxygen-containing gas.

In addition to pure oxygen, examples of the oxygen-containing gas may include a mixture of oxygen and an inert gas such as nitrogen in an arbitrary ratio, air, and a mixture of air and an inert gas such as nitrogen or a noble gas in an arbitrary ratio.

The pressure in the system during the polymerization reaction may be ordinary pressure, or may be a reduced pressure or an increased pressure as required.

Although the supply rate of the oxygen-containing gas can be arbitrarily selected in consideration of heat removal, the rate of polymerization and the like, it is preferred to set this rate to 5 NmL/min or more in terms of pure oxygen per mol of the phenol compound used in polymerization, and more preferably 10 NmL/min or more.

A neutral salt such as an alkali metal hydroxide, alkaline earth metal hydroxide, alkali metal alkoxide, magnesium sulfate, and calcium chloride, zeolite and the like may be added to the polyphenylene ether polymerization reaction system.

Further, surfactants that conventionally have been known to have an effect for improving polymerization activity may also be added to the polymerization solvent. Examples of such a surfactant may include trioctylmethylammonium chloride, known as Aliquat 336 and CapRiquat (trade names, manufactured by Dojindo Laboratories). It is preferred that the amount used is in the range of not more than 0.1 mass% based on the total amount of the polymerization reaction raw materials.

As the catalyst used to produce the polyphenylene ether powder according to the present embodiment, a known catalyst system commonly used in the production of polyphenylene ethers can be used.

Examples of the catalyst may include a catalyst system formed from a transition metal ion having a redox ability and an amine compound capable of forming a complex with this metal ion. Specific examples may include a catalyst system formed from a copper compound and an amine, a catalyst system formed from a manganese compound and an amine, and a catalyst system formed from a cobalt compound and an amine.

Since the polymerization reaction efficiently proceeds under slightly alkaline conditions, at this stage a slight amount of an alkali or an additional amine may be added.

Examples of preferred catalysts in the production step of the polyphenylene ether powder according to the present embodiment may include catalysts that include, as their component, a copper compound, a halogen compound, and a diamine compound represented by the following formula (3) .

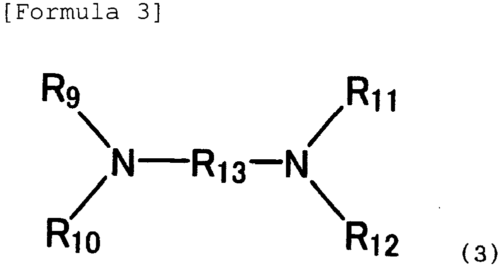

R₉, R₁₀, R₁₁, and R₁₂ in formula (3) each independently represent any member selected from the group consisting of a hydrogen atom and a straight chain or branched chain alkyl group having 1 to 6 carbon atoms. However, R₉, R₁₀, R₁₁, and R₁₂ may not all simultaneously be hydrogen. R₁₃ represents a straight chain or branched chain alkylene group having 2 to 5 carbon atoms.

As the copper compound forming the catalyst component, a copper(I) compound, a copper(II) compound, or a mixture thereof may be used. Examples of the copper(I) compound may include copper(I) chloride, copper(I) bromide, copper(I) sulfate, and copper(I) nitrate. Examples of the copper(II) compound may include copper(II) chloride, copper(II) bromide, copper(II) sulfate, and copper(II) nitrate. Among these, especially preferred copper compounds are copper(I) chloride, copper(II) chloride, copper(I) bromide, and copper(II) bromide.

Further, these copper compounds may also be synthesized from a reaction of the oxide (e.g., copper(I) oxide), carbonate, hydroxide and the like with the corresponding halogen or acid.

For example, the copper compound can be synthesized by mixing copper(I) oxide and a halogen compound (e.g., a hydrogen halide solution). These copper compounds can be used singly or in combinations of two or more thereof.

Examples of the halogen compound forming the catalyst component may include hydrogen chloride, hydrogen bromide, hydrogen iodide, sodium chloride, sodium bromide, sodium iodide, potassium chloride, potassium bromide, potassium iodide, tetramethylammonium chloride, tetramethylammonium bromide, tetramethylammonium iodide, tetraethylammonium chloride, tetraethylammonium bromide, and tetraethylammonium iodide. These can also be used as an aqueous solution or as a solution using a suitable solvent.

These halogen compounds can be used singly or in combinations of two or more thereof.

Preferred halogen compounds are an aqueous solution of hydrogen chloride and an aqueous solution of hydrogen bromide.

Although the amount of these compounds used is not especially limited, based on the molar amount of copper atoms, it is preferred to use two times or more to 20 times or less of halogen atoms. Based on 100 moles of the used phenol compound, it is preferred to use in the range of 0.02 moles to 0.6 moles of copper atoms.

Examples of the diamine compound represented by the above formula (3) may include N,N,N',N'-tetramethylethylenediamine, N,N,N'-trimethylethylenediamine, N,N'-dimethylethylenediamine, N,N-dimethylethylenediamine, N-methylethylenediamine, N,N,N',N'-tetraethylethylenediamine, N,N,N'-triethylethylenediamine, N,N'-diethylethylenediamine, N,N-diethylethylenediamine, N-ethylethylenediamine, N,N-dimethyl-N'-ethylethylenediamine, N,N'-dimethyl-N-ethylethylenediamine, N-n-propylethylenediamine, N,N'-di-n-propylethylenediamine, N-i-propylethylenediamine, N,N'-di-i-propylethylenediamine, N-n-butyl ethylenediamine, N,N'-di-n-butyl ethylenediamine, N-i-butyl ethylenediamine, N,N'-di-i-butyl ethylenediamine, N-t-butyl ethylenediamine, N,N'-di-t-butyl ethylenediamine, N,N,N',N'-tetramethyl-1,3-diaminopropane, N,N,N'-trimethyl-1,3-diaminopropane, N,N'-dimethyl-1,3-diaminopropane, N-methyl-1,3-diaminopropane, N,N,N',N'-tetramethyl-1,3-diamino-1-methylpropane, N,N,N',N'-tetramethyl-1,3-diamino-2-methylpropane, N,N,N',N'-tetramethyl-1,4-diaminobutane, N,N,N',N'-tetramethyl-1,5-diaminopentane.

A preferred diamine compound has an alkylene group (R₁₃) having 2 or 3 carbon atoms that links two nitrogen atoms.

Although the amount of these diamine compounds used is not especially limited, the amount used is, based on 100 moles of the phenol compound that is generally used, in the range of 0.01 moles to 10 moles.

Other components forming the polymerization catalyst will now be described.

In addition to the above-described catalyst components, the polymerization catalyst used in the polymerization step can also contain, for example, a tertiary monoamine compound or a secondary monoamine compound singly or in combination.

The tertiary monoamine compound is an aliphatic tertiary amine including an alicyclic tertiary amine.

Examples of such a tertiary monoamine compound may include trimethylamine, triethylamine, tripropylamine, tributylamine, triisobutylamine, dimethylethylamine, dimethylpropylamine, allyldiethylamine, dimethyl-n-butylamine, diethylisopropylamine, and N-methylcyclohexylamine.

These tertiary monoamines can be used singly or in combinations of two or more thereof. Although the amount used is not especially limited, it is preferably 15 moles or less based on 100 moles of the phenol compound to be polymerized.

In the production of the polyphenylene ether powder according to the present embodiment, it is not necessary to add the whole amount of the tertiary monoamine compound that is generally used into the reaction system from the start. Specifically, a part of the tertiary monoamine compound may be added during the polymerization process, or a part may be successively added from the start of polymerization. Further, the tertiary monoamine compound may be added to the phenol compound or a solution of the phenol compound simultaneously with the start of polymerization, so that they are both added together.

Examples of the secondary monoamine compound may include a secondary aliphatic amine.

Examples of such a secondary monoamine compound may include dimethylamine, diethylamine, di-n-propylamine, di-i-propylamine, di-n-butylamine, di-i-butylamine, di-t-butylamine, dipenthylamines, dihexylamines, dioctylamines, didecylamines, dibenzylamines, methylethylamine, methylpropylamine, methylbutylamine, and cyclohexylamine.

The secondary monoamine compound may also be a secondary monoamine compound including an aromatic group. Examples thereof may include N-phenylmethanolamine, N-phenylethanolamine, N-phenylpropanolamine, N-(m-methylphenyl)ethanolamine, N-(p-methylphenyl)ethanolamine, N-(2',6'-dimethylphenyl)ethanolamine, N-(p-chlorophenyl)ethanolamine, N-ethylaniline, N-butylaniline, N-methyl-2-methylaniline, N-methyl-2,6-dimethylaniline, and diphenylamine. These secondary monoamine compounds can be used singly or in combinations of two or more thereof. Although the amount of secondary monoamine compound used is not especially limited, it is preferably 15 moles or less based on 100 moles of the phenol compound to be polymerized.

Although the post-treatment method performed after the polymerization reaction has finished is not especially limited, generally, common examples may include a method in which the catalyst is deactivated by adding an acid such as hydrochloric acid or acetic acid, ethylenediaminetetraacetic acid (EDTA) and its salt, nitrilotriacetic acid and its salt and the like to the reaction solution.

It is preferred that the method for producing the polyphenylene ether powder according the present embodiment includes; step 1 of obtaining a solution (I) including polyphenylene ether and a good solvent by polymerizing a phenol compound while introducing oxygen in the presence of a catalyst in a good solvent for polyphenylene ether; step 2 of obtaining a solution (II) from the solution (I) obtained in step 1 in which a concentration of polyphenylene ether has been adjusted to 25 mass% or more and 45 mass% or less; step 3 of obtaining a slurry by mixing the solution (II) obtained in step 2 with a poor solvent for polyphenylene ether and precipitating the polyphenylene ether; and step 4 of milling wet polyphenylene ether obtained by subjecting the slurry obtained in step 3 to solid-liquid separation, wherein in step 1, the amount of oxygen introduced is 20 to 30 NL per mol of the phenol compound, and in step 3, the polyphenylene ether concentration in the slurry when precipitating the polyphenylene ether is 15 mass% or more and 30 mass% or less. Further, in step 3 of the method for producing the polyphenylene ether powder according to the present embodiment, it is preferred that the slurry temperature when precipitating the polyphenylene ether is 0°C or more and 70°C or less.

In the solution polymerization method, for example, the concentration of the polyphenylene ether in the solution (I) (hereinafter sometimes referred to as "enrichment level") can be increased by, after deactivating the catalyst by the above-described method, heating the solution (I) which includes the polyphenylene ether and a good solvent to a temperature equal to or greater than the boiling point of the good solvent. A preferred lower limit for the enrichment level is 25 mass% or more, more preferably 30 mass% or more, and even more preferably 35 mass% or more. Further, a preferred upper limit for the enrichment level is 45 mass% or less, more preferably 43 mass% or less, and even more preferably 40 mass% or less.

Examples of methods for adjusting the enrichment level may include a method in which the good solvent is removed by heating the solution (I) to a temperature equal to or greater than the boiling point of the good solvent and a method in which polyphenylene ether is added to the solution (I). Among these, preferred is the method in which the good solvent is removed by heating the solution (I) to a temperature equal to or greater than the boiling point of the good solvent.

If the polyphenylene ether enrichment level is 25 mass% or more, during polyphenylene ether precipitation in step 3, it is more difficult for the good solvent concentration to increase, so that it is not necessary to use a large amount of poor solvent, which is efficient. Further, the polyphenylene ether that is precipitated under such conditions is less susceptible to turning into a porous state due to good solvent seeping out from the polyphenylene ether particles during drying after solid-liquid separation, so that the loose apparent specific gravity increases.

If the polyphenylene ether enrichment level is 45 mass% or less, it is more difficult for the liquid viscosity to increase, so that stable operation can be carried out.

In the above step 1, it is preferred that the introduction amount of oxygen is 20 to 30 NL per mol of the phenol compound.

As described above, as the oxygen introduced in step 1, in addition to pure oxygen, a mixture of oxygen and an inert gas such as nitrogen in an arbitrary ratio, air, a mixture of air and an inert gas such as nitrogen or a noble gas in an arbitrary ratio, and the like may be used. When using a mixed gas of oxygen and another gas, the above-described introduction amount of oxygen is calculated in terms of pure oxygen.

It is preferred that the method for producing the polyphenylene ether powder according to the present embodiment includes step 3 of obtaining a slurry by mixing the solution (II) obtained in step 2 with a poor solvent for polyphenylene ether and precipitating the polyphenylene ether, wherein in this step 3, the polyphenylene ether concentration in the slurry when precipitating the polyphenylene ether is 15 mass% or more and 30 mass% or less.

A powder-state polyphenylene ether can be obtained by mixing the solution (II), which includes polyphenylene ether that has been concentrated to a predetermined enrichment level and a good solvent, with a poor solvent for polyphenylene ether, such as methanol. During this process, the lower limit for the polyphenylene ether concentration in the slurry during polyphenylene ether precipitation is preferably 15 mass%, more preferably 18 mass%, even more preferably 20 mass%, and especially preferably 21 mass%. Further, the upper limit for the polyphenylene ether concentration in the slurry during polyphenylene ether precipitation is preferably 30 mass%, more preferably 25 mass%, even more preferably 24 mass%, and especially preferably 23 mass%.

If the polyphenylene ether concentration in the slurry during polyphenylene ether precipitation is 15 mass% or more, the solid-liquid ratio of the slurry during polyphenylene ether precipitation does not become too low, the ratio of fine particles decreases, and the dried polyphenylene ether powder has a higher loose apparent specific gravity. Further, if the polyphenylene ether concentration in the slurry during polyphenylene ether precipitation is 30 mass% or less, the fluidity of the polymer during the polyphenylene ether precipitation step is good, and a phenomenon in which the good solvent soaks into the polyphenylene ether particles is less likely to occur. Therefore, after the slurry is subjected to solid-liquid separation, when drying the solid portion, since the good solvent is less likely to seep out from the polyphenylene ether particles, the dried polyphenylene ether powder is less likely to become a porous state, and the loose apparent specific gravity increases.

Further, in step 3 of the method for producing the polyphenylene ether powder according to the present embodiment, it is preferred that the slurry temperature when precipitating the polyphenylene ether is 0°C or more and 70°C or less. The lower limit for the slurry temperature during polyphenylene ether precipitation is preferably 0°C, more preferably 20°C, and even more preferably 40°C. The upper limit for the slurry temperature during polyphenylene ether precipitation is preferably 70°C, more preferably 65°C, and even more preferably 60°C.

If the slurry temperature during polyphenylene ether precipitation is 0°C or more, a phenomenon in which the polyphenylene ether precipitates into a solid at the moment the solution (II) and the poor solvent for polyphenylene ether are mixed is less likely to occur. Consequently, the particle shape of the obtained polyphenylene ether powder is less likely to be irregular, so that the loose apparent specific gravity increases. Further, if the slurry temperature during polyphenylene ether precipitation is 70°C or less, swelling of the polymer due to the good solvent tends to be suppressed, and after the slurry is subjected to solid-liquid separation, when drying the solid portion, since the good solvent is less likely to seep out from the polyphenylene ether particles, the dried polyphenylene ether powder is less likely to become a porous state, and the loose apparent specific gravity increases.

The poor solvent for polyphenylene ether is not especially limited as long as the solvent does not dissolve the polyphenylene ether. Examples thereof may include alcohols such as methanol, ethanol, propanol, and butanol; ketones such as acetone, methyl ethyl ketone, and methyl isobutyl ketone; and water. Further, this poor solvent may also be a mixture of two or more selected from these.

Subsequently, since the polymerization solution when polymerization has finished is in a state in which the polyphenylene ether has precipitated, it is preferred to repeatedly carry out a washing treatment using a solution having, as a main component, a poor solvent that has a low polyphenylene ether dissolution capability in order to clean and remove the catalyst.

The slurry obtained by a precipitation polymerization method or a solution polymerization method can be separated into a wet cake and a filtrate with a solid-liquid separator. The solid-liquid separator is not especially limited, and examples of solid-liquid separators that can be used may include a centrifuge separator (a vibration type, a screw type, a decanter type, a basket type, and the like), a vacuum filtration machine (a drum type filter, a belt filter, a rotary vacuum filter, a Young filter, a Nutsche filter, and the like), a filter press, and a roll press.

In the method for producing the polyphenylene ether powder according to the present embodiment, it is preferred to include step 4 of milling wet polyphenylene ether obtained by subjecting the slurry obtained in step 3 to solid-liquid separation. By milling the wet polyphenylene ether (e.g., a wet cake), a polyphenylene ether powder having a loose apparent specific gravity in the above-described range can be obtained. In the method for producing the polyphenylene ether powder according to the present embodiment, the milling is not especially limited, and may be carried out using, for example, a jaw crusher, a cone crusher, a hammer mill, a feather mill, a ball mill, a high-speed rotation mill, and a jet mill.

Next, the polyphenylene ether powder can be recovered by subjecting the wet polyphenylene ether (e.g., a wet cake) to a drying treatment using various dryers. The drying apparatus is not especially limited, and examples of dryers that can be used may include,a continuous dryer (a paddle dryer, an inclined disk dryer, a steam tube dryer, a CD dryer, and the like) and a batch dryer (a tumbler, a vacuum dryer, a Nauta mixer, a Ribocone drier, and the like).

It is preferred that the drying step is carried out with a mixing device. Examples of devices may include a stirring type dryer and a tumbling type dryer. By using such a combination, the treatment amount can be increased, and high productivity can be maintained.

The drying temperature is preferably 60°C or more, more preferably 80°C or more, even more preferably 120°C or more, still even more preferably 140°C or more, and especially preferably 150°C or more.

By performing the drying of the polyphenylene ether at a temperature of 60°C or more, the content of aromatic hydrocarbons in the polyphenylene ether can be efficiently suppressed to less than 1.5 mass%.

Effective examples of methods for obtaining the polyphenylene ether powder with a high efficiency may include increasing the drying temperature, bringing the wet polyphenylene ether (e.g., a wet cake) into contact with a drying atmosphere gas, increasing the degree of vacuum in the drying atmosphere, and performing stirring during the drying. Although it is possible to combine these drying methods, from the perspective of production efficiency, a method which increases the drying temperature and brings the wet polyphenylene ether (e.g., a wet cake) into contact with a drying atmosphere gas is preferred.

### [Polyphenylene Ether Resin Composition]

A polyphenylene ether resin composition (A) according to the present embodiment includes (a) the above-described polyphenylene ether powder, and (b) a good solvent for the polyphenylene ether powder.

The (b) good solvent for the polyphenylene ether powder is a solvent capable of dissolving poly(2,6-dimethylphenylene) ether (hereinafter sometimes referred to as "(b) good solvent").

The (b) good solvent is preferably one or more solvents selected from the group consisting of aromatic hydrocarbons, halogenated hydrocarbons, nitro compounds, aliphatic hydrocarbons, and ethers.

Specific examples of the (b) good solvent may include aromatic hydrocarbons, such as benzene, toluene, xylene (including the respective o-, m-, and p-isomers), ethylbenzene, and styrene; halogenated hydrocarbons such as chloroform, methylene chloride, 1,2-dichloroethane, chlorobenzene, and dichlorobenzene; and nitro compounds, such as nitrobenzene. Further, other solvents that can be classified as the (b) good solvent include aliphatic hydrocarbons, such as pentane, hexane, heptane, cyclohexane, and cyclohexane; esters such as ethyl acetate and ethyl formate; ethers such as tetrahydrofuran and diethyl ether; dimethyl sulfoxide and the like.

Those (b) good solvents can be used singly or in combinations of two or more thereof. Preferred among these as the (b) good solvent are aromatic hydrocarbons, such as benzene, toluene, xylene, ethylbenzene, and styrene; and halogenated hydrocarbons such as chlorobenzene and dichlorobenzene. The polyphenylene ether concentration in the polyphenylene ether resin composition after dissolution in the (b) good solvent is, from the perspective of thickness retention during covering by applying, coating or the like, preferably 5 mass% or more and 60 mass% or less, more preferably 10 mass% or more and 60 mass% or less, and even more preferably 15 mass% or more and 60 mass% or less. Specifically, a mass ratio ((a)/(b)) of the (a) polyphenylene ether powder and the (b) good solvent is preferably 5/95 to 60/40, more preferably 10/90 to 60/40, and even more preferably 15/85 to 60/40.

Further, as another embodiment, a polyphenylene ether resin composition (B) according to the present embodiment includes the above-described (a) polyphenylene ether powder and (d) a filler. The polyphenylene ether resin composition (B) according to the present embodiment is obtained by, for example, melt-kneading the above-described component (a) and component (d) using an extruder and the like. The content of the (d) filler is preferably, based on component (a), 1 to 60 mass%, more preferably 5 to 55 mass%, and even more preferably 5 to 50 mass%.

The (d) filler is a component conferring many functions to the above-described component (a) and the resin composition including component (a). For example, the (d) filler can be selected based on the intended purpose, such as conferring rigidity, conferring heat resistance, conferring thermal conductivity, conferring electrical conductivity, improving mold shrinkage, and improving the linear expansion coefficient.

A pellet of the polyphenylene ether resin composition (B) according to the present embodiment can be obtained by melt-kneading the (a) polyphenylene ether powder and (d) filler using an extruder and the like. A molded specimen obtained by molding a pellet of the polyphenylene ether resin composition (B) exhibits little deterioration in mechanical properties such as tensile strength before and after dipping in an aqueous alkali solution, for example. Even from the perspective of alkali resistance, the polyphenylene ether resin composition (B) according to the present embodiment has a capability not found conventionally.

The (d) filler that can be used is, for example, at least one selected from the group consisting of inorganic salts, glass fibers (glass long fibers and chopped strand glass fibers), cellulose, glass flakes, glass beads, carbon long fibers, chopped strand carbon fibers, whiskers, mica, clay, talc, kaolin, magnesium hydroxide, magnesium sulfate and fibers thereof, silica, carbon black, titanium oxide, calcium carbonate, fly ash (coal ash), potassium titanate, wollastonite, thermally conductive materials (graphite, aluminum nitride, boron nitride, alumina, beryllium oxide, silicon dioxide, magnesium oxide, aluminum nitrate, barium sulfate, and the like), conductive metal fibers, conductive metal flakes, carbon black that exhibits electrical conductivity, carbon fibers that exhibit electrical conductivity, carbon nanotubes, single metals, and alloys formed from two or more metals. Preferable examples may include glass fibers, carbon fibers, metal fibers, inorganic salts, wollastonite, kaolin, talc, calcium carbonate, silica, and titanium oxide. More preferably, the (d) filler is one or more selected from the group consisting of glass fibers, metal fibers, inorganic salts, wollastonite, kaolin, talc, calcium carbonate, silica, and titanium oxide.

These fillers may have been further treated with a surface treatment agent, such as a silane coupling agent, a titanate coupling agent, an aliphatic carboxylic acid, and an aliphatic metal salt, have been subjected to an organic treatment with an ammonium salt and the like by an intercalation method, or have been treated with a resin such as a urethane resin and an epoxy resin as a binder.

It is more preferred that a conventionally-known additive (g) or a thermoplastic elastomer (h) is added during the melt-kneading to the polyphenylene ether resin composition (B) according to the present embodiment in order to confer an effect such as electrical conductivity, flame retardancy and impact resistance.

The polyphenylene ether resin composition (B) according to the present embodiment can be obtained by melt-kneading using the above-described respective components. It is preferred that the melt-kneading temperature is in the range of 260 to 370°C, more preferably in the range of 260 to 360°C, and even more preferably in the range of 260 to 350°C. Specific examples of the processing machine for obtaining the polyphenylene ether resin composition (B) according to the present embodiment may include a single-screw extruder, a twin-screw extruder, a roll, a kneader, a Brabender, and a Banbury mixer. Preferred among these is a twin-screw extruder.

Further, in the polyphenylene ether resin composition (A) or (B) according to the present embodiments, various types of known stabilizer (c) can be preferably used to stabilize the polyphenylene ether. Examples of the (c) stabilizer may include metal-based stabilizers, such as zinc oxide and zinc sulfide, and organic stabilizers, such as hindered phenol stabilizers, phosphate stabilizers, and hindered amine stabilizers.

The preferred blend amount of the (c) stabilizer is, based on 100 parts by mass of the (a) polyphenylene ether powder, preferably 0.001 parts by mass or more and less than 5 parts by mass, and more preferably 0.010 parts by mass or more and less than 3 parts by mass. Especially preferred among the stabilizers is an antioxidizing agent that simultaneously has the sulfur element and a hydroxyl group in the molecule. Specific examples of commercially-available products may include Irganox 1520 or Irganox 1726, which can be obtained from Ciba Specialty Chemicals. From the perspective of preventing in advance discoloration of the PPE due to an oxidation reaction, the use of these stabilizers in the above-described blend amount is very effective.

In addition, the polyphenylene ether resin composition (A) or (B) according to the present embodiments may include, based on component (a), 0.01 to 60 mass%, more preferably 1 to 57 mass%, even more preferably 5 to 55 mass%, and most preferably 5 to 50 mass%, of a conventionally-known thermoplastic resin (e) and thermosetting resin (f). Examples of the (e) thermoplastic resin and the (f) thermosetting resin may include resins such as polyethylene, polypropylene, thermoplastic elastomers, polystyrene, acrylonitrile/styrene resin, acrylonitrile/butadiene/styrene resin, methacrylic resin, polyvinyl chloride, polyamide, polyacetal, ultra high molecular weight polyethylene, polybutylene terephthalate, polymethylpentene, polycarbonate, polyphenylene sulfide, polyether ketone, liquid crystal polymer, polytetrafluoroethylene, polyetherimide, polyarylate, polysulfone, polyether sulfone, polyamide-imide, phenol, urea, melamine, unsaturated polyester, alkyd, epoxy, diallyl phthalate, and bis-maleimide.

Examples of other components that can be blended to the polyphenylene ether resin composition (A) or (B) according to the present embodiments may include additives such as a release agent, a processing aid, a flame retardant, a drip prevention agent, a nucleating agent, a UV-screening agent, a dye, a pigment, an antioxidizing agent, an antistatic agent, and a blowing agent. As these additives, any additive known in the present technical field may be used. A lower limit value for the additive blend amount is, based on 100 parts by mass of component (a), 0.01 parts by mass or more, more preferably 0.05 parts by mass or more, and even more preferably 0.1 parts by mass or more. An upper limit for the blend amount of these additives is, based on 100 parts by mass of component (a), 10 parts by mass or less, more preferably 5 parts by mass or less, and even more preferably 3 parts by mass or less. However, for a flame retardant, the upper limit value for the blend amount is, based on 100 parts by mass of component (a), 100 parts by mass or less, more preferably 70 parts by mass or less, and even more preferably 50 parts by mass or less. Examples of such a flame retardant that can be used may include at least one selected from the group consisting of organophosphate compounds, metal phosphinates, magnesium hydroxide, ammonium polyphosphate flame retardants, melamine flame retardants, triazine flame retardants, aromatic halogenated flame retardants, silicone flame retardants, and fluoropolymers.

The polyphenylene ether resin composition (A) according to the present embodiment can cover various surfaces by coating based on various methods using the above-described respective components. For example, using the polyphenylene ether resin composition (A) according to the present embodiment, the surface of inorganic particles, a metal sheet, a metal plate, metallic pigment particles and the like can be covered.

Examples of the coating method may include coating with the above-described respective components by paint brush coating, hand roller coating, bar coater coating, spin coater coating, filler coater coating, gravure coater coating, blade coater coating, knife coater coating, air knife coater coating, die coater coating, impregnation coater coating, rotary screen coater coating, hot melt coater coating, roll coater coating, vacuum coating, flow coater coating, spindle coating, electrodeposition coating, spray coating, cast coating and the like. Further, if the coated surface is particulate, for example, if the surface is covered with inorganic fine particles such as metal fine particles, or pigment fine particles, examples thereof may include a method that performs mixing with the resin composition in a mixer, such as a Henschel mixer, a mill mixer, a ribbon blender, a tumbler blender, a rocking mixer, a Rheokneader, a speed kneader, a V-type mixer, a W-type mixer, a paddle mixer, and a Nauta mixer. During this operation, although the drying temperature of the covered surface is not especially limited, it can be usually arbitrarily selected in the range of room temperature to 350°C.

### Examples

The present embodiment will now be specifically described based on the following Examples and Comparative Examples. However, the scope of the present embodiment is not limited to these Examples.

First, the physical properties and the measurement methods of the physical properties and the like applied in the Examples and Comparative Examples will be described below.

### (1) Quantification of the component having a molecular weight of 8,000 or less and the component having a molecular weight of 50,000 or more, and measurement of the number average molecular weight (Mn)

Measurement was carried out using a calibration curve based on standard polystyrene that was drawn using the Gel Permeation Chromatography System 21 manufactured by Showa Denko K.K. as the measurement apparatus.

Standard polystyrene having molecular weights of 3,650,000, 2,170,000 1,090,000, 681,000, 204,000, 52,000, 30,200, 13,800, 3,360, 1,300, and 550 were used.

For the column, two K-805L columns manufactured by Showa Denko K.K. connected in series were used.

Measurement was carried out using chloroform as the solvent, at a solvent flow rate of 1.0 ml/min, and a column temperature of 40°C.

A solution of a polyphenylene ether powder in 1 g/L chloroform was produced and used for the measurement sample.

The UV wavelength of the detection unit was set at 254 nm for the standard polystyrenes, and at 283 nm for polyphenylene ether.

### (2) Measurement of loose apparent specific gravity

Loose apparent specific gravity was measured with a powder tester (Powder Tester Type PT-E, manufactured by Hosokawa Micron Corporation) according to the operating manual for that machine. Specifically, loose apparent specific gravity was measured as in the following (2-1) to (2-7).
(2-1) A fixed chute was fitted to two pins on the front face of a casing, and a vibro chute, a space ring, a sieve (openings of 710 µm), a sieve holder, and a holding bar, in that order, were attached and then each fixed with a knob nut to a shake table.
(2-2) A rectangular bat was placed directly beneath the fixed chute, and a loose apparent specific gravity measuring cup (hereinafter sometimes referred to simply as "cup") was placed in a concave portion of a table cup base. During this operation, the centers of the cup and the fixed chute were aligned (the weight of the empty cup was weighed in advance).
(2-3) The powder to be measured was gently placed in a suitable amount onto a sieve using a scoop.
(2-4) The vibration/tapping switch was set to VIB, and the timer was set to the right as far as it would go. It was confirmed that the rheostat voltage was at 0, and the start button was then pressed.
(2-5) The rheostat voltage was gradually increased to make the powder flow into the cup. The rheostat voltage was adjusted so that the time required for the powder to pile up high in the cup was about 20 to 30 seconds. Once the cup was filled with the powder piled up high, the rheostat voltage was turned down to 0 to stop the vibrations.
(2-6) The side face of the powder piled up high filling the cup was cut across with a blade erected perpendicularly, and the weight of the powder in the cup (powder weight) was weighed.
(2-7) Since the volume of the cup is 100 cc, the loose apparent specific gravity was calculated by dividing the powder weight by 100. The calculated value was recorded.

### (3) Solvent solubility evaluation

A wide-mouthed 5 L polypropylene bottle was charged with 2 kg of toluene and 1 kg of a polyphenylene ether powder, then further charged with 2 kg of toluene, and the cap of the bottle was closed. Then, after the bottle was shaken and stirred up and down 15 times, stirring was carried out for 1 hour with the bottle on a Double-Action Lab Shaker (manufactured by AS ONE Corporation). The temperature was set to 50°C. After 1 hour, the solubility in the solvent was visually confirmed. Cases in which the polyphenylene ether powder had completely dissolved were marked with a ○, cases in which a small amount was left were marked with a Δ, and cases in which a large amount was left were marked with a X.

### (4) Evaluation of polyphenylene ether properties after covering by coating

A solution in which 10 g of a polyphenylene ether powder had been mixed and completely dissolved in 40 g of toluene was spread over a 150 mm × 200 mm × 0.2 mm aluminum plate, which was then uniformly covered using a bar coater. The covered aluminum plate was placed on a hot plate set to 70°C. After the smell of toluene was confirmed to have disappeared, the temperature was returned to room temperature.

Then, the four corners of the aluminum plate covered with a film of polyphenylene ether were fixed with a clamp, and steel balls of 10 mm in diameter were dropped onto the middle of the aluminum plate from a height of 60 cm from the aluminum plate. Cases in which the film cracked or fissures were formed during this operation were marked with a X, and cases in which there were no cracks or fissures were marked with a ○. If there were no cracks or fissures, this indicates that the mechanical properties of the covering film are high.

### (5) Evaluation of alkali resistance

A molded article was produced based on ISO 527 using a composition including a polyphenylene ether powder and a filler. The tensile strength of this article was evaluated under conditions of 23°C and 50% RH. During this operation, the molded article was dipped for 100 hr in an aqueous solution of 10 mass% caustic soda, and the retention rate of tensile strength before and after the dipping was evaluated.

### <Examples 1 to 5>

A 40 L jacketed polymerization tank equipped with, at the bottom of the polymerization tank, a sparger for introducing an oxygen-containing gas, a stirring turbine blade, and a baffle, and, in a vent gas line at the upper portion of the polymerization tank, a reflux condenser, was charged in the amounts shown in Table 1 with copper(II) oxide, an aqueous solution of 47 mass% hydrogen bromide, di-t-butylethylenediamine, di-n-butylamine, butyldimethylamine, toluene, and 2,6-dimethylphenol, while blowing nitrogen gas at a flow rate of 0.5 L/min. The resultant mixture was then stirred until it became a uniform solution and the internal temperature of the polymerization tank was 25°C.

Next, dry air was introduced into the polymerization tank by the sparger at the rate and for the aeration time shown in Table 1 to obtain a polymerization mixture. In Examples 2 to 4, simultaneously with the introduction of dry air into the polymerization tank by the sparger at the rate shown in Table 1, the solution formed from toluene, 2,6-dimethylphenol, and butyldimethylamine shown in Table 1 was added by a plunger pump into the polymerization tank over the extra addition time shown in Table 1.

Control was performed so that the internal temperature when polymerization finished was 40°C. The polymerization mixture when polymerization finished was in a solution state.

The aeration with the dry air was stopped, and to the polymerization mixture was then added 10 kg of an aqueous solution of 2.5 mass% tetrasodium ethylenediaminetetraacetate (a reagent manufactured by Dojindo Laboratories). The polymerization mixture was stirred for 150 minutes at 70°C, then left to stand for 20 minutes, so that the organic phase and the aqueous phase were separated by liquid-liquid separation. The organic phase included polyphenylene ether and toluene (boiling point: 110.6°C).

The obtained organic phase was heated to 120°C, and toluene vapor was extracted out of the system until the concentration of polyphenylene ether (PPE) in the organic phase was 36 mass%.

The obtained organic phase was cooled to room temperature, and then methanol was added to produce a slurry in which polyphenylene ether had precipitated. During this operation, the slurry temperature was 55°C, and the concentration of polyphenylene ether (PPE) in the slurry was 21 mass%. Then, the slurry was filtered through a basket frame (Model 0-15, manufactured by Tanabe Willtec Inc.). After filtering, the excess methanol was added into the basket centrifuge, and filtering was then carried out again to obtain wet polyphenylene ether.

Next, the wet polyphenylene ether was milled by charging into a feather mill (FM-1S, manufactured by Hosokawa Micron Corporation) in which a 10 mm round hole mesh was set. The wet polyphenylene ether was held for 1.5 hours at 150°C and 1 mmHg to obtain a dry polyphenylene ether powder. The obtained polyphenylene ether powder was subjected to the respective measurements based on the methods described above. The results are collectively shown in Table 1.

### <Example 6>

A dry polyphenylene ether powder was obtained in the same manner as in Example 1, except that an 8 mm round hole mesh was used for the round hole mesh set in the feather mill (FM-1S, manufactured by Hosokawa Micron Corporation) when milling the wet polyphenylene ether. The obtained polyphenylene ether powder was subjected to the respective measurements based on the methods described above. The results are collectively shown in Table 1.

### <Example 7>

A dry polyphenylene ether powder was obtained in the same manner as in Example 1, except that an 11 mm round hole mesh was used for the round hole mesh set in the feather mill (FM-1S, manufactured by Hosokawa Micron Corporation) when milling the wet polyphenylene ether. The obtained polyphenylene ether powder was subjected to the respective measurements based on the methods described above. The results are collectively shown in Table 1.

**[Table 1]**

| | | | Example 1 | Example 2 | Example 3 | Example 4 | Example 5 | Example 6 | Example 7 |
|---|---|---|---|---|---|---|---|---|---|
| Initial Charging | Copper(II) oxide | [g] | 4.57 | 4.02 | 4.57 | 4.57 | 4.57 | 4.57 | 4.57 |
| | Aqueous solution of 47 mass% hydrogen bromide | [g] | 24.18 | 29.876 | 24.18 | 24.18 | 24.18 | 24.18 | 24.18 |
| | Di-t-butylethylenediamine | [g] | 11 | 9.684 | 11 | 11 | 11 | 11 | 11 |
| | Di-n-butylamine | [g] | 62.72 | 46.88 | 62.72 | 62.72 | 62.72 | 62.72 | 62.72 |
| | Butyldimethylamine | [g] | 149.92 | 122.28 | 128.14 | 14.27 | 149.92 | 149.92 | 149.92 |
| | Toluene | [Kg] | 20.65 | 17.53 | 17.53 | 16.15 | 20.65 | 20.65 | 20.65 |
| | 2,6-Dimethylphenol | [Kg] | 3.12 | 1.5 | 1.5 | 1.5 | 3.12 | 3.12 | 3.12 |
| | Dry air introduction rate | [NL/min] | 32.8 | 32.8 | 32.8 | 40.4 | 32.8 | 32.8 | 32.8 |
| | Dry air aeration time | [min] | 86 | 86 | 87 | 87 | 95 | 86 | 86 |
| Extra Solution | Toluene | [Kg] | 0 | 3.12 | 3.12 | 3.12 | 0 | 0 | 0 |
| | 2,6-Dimethylphenol | [Kg] | 0 | 1.62 | 1.62 | 1.62 | 0 | 0 | 0 |
| | Butyldimethylamine | [g] | 0 | 0 | 21.56 | 128.43 | 0 | 0 | 0 |
| | Extra addition time | [min] | - | 30 | 30 | 30 | - | - | - |
| | Amount of pure oxygen introduced per mol of 2,6-dimethylphenol | [NL] | 23 | 23 | 23 | 29 | 26 | 23 | 23 |
| Precipitation Conditions | PPE concentration in organic phase | [mass%] | 36 | 36 | 36 | 36 | 36 | 36 | 36 |
| | Slurry temperature | [°C] | 55 | 55 | 55 | 55 | 55 | 55 | 55 |
| | PPE concentration in slurry | [mass%] | 21 | 21 | 21 | 21 | 21 | 21 | 21 |
| Milling Conditions | Feather mill round hole mesh size | [mm] | 10 | 10 | 10 | 10 | 10 | 8 | 11 |
| Evaluation Results | Molecular weight of 50,000 or more | [mass%] | 12 | 12 | 8 | 12 | 16 | 12 | 12 |
| | Molecular weight of 8,000 or less | [mass%] | 22 | 18 | 18 | 24 | 15 | 22 | 22 |
| | Mn | | 11000 | 11500 | 11000 | 10500 | 12700 | 11000 | 11000 |
| | Reduced viscosity | [dl/g] | 0.34 | 0.35 | 0.34 | 0.33 | 0.38 | 0.34 | 0.34 |
| | Loose apparent specific gravity | [g/cc] | 0.51 | 0.51 | 0.52 | 0.51 | 0.51 | 0.45 | 0.55 |
| | Solvent solubility | | ○ | ○ | ○ | ○ | ○ | ○ | ○ |
| | Covering film strength | | ○ | ○ | ○ | ○ | ○ | ○ | ○ |

The polyphenylene ether powders obtained in Examples 1 to 7 were polyphenylene ether powders having a low molecular weight in which the component having a molecular weight of 50,000 or more was in the range of 5 to 20 mass% and the component having a molecular weight of 8,000 or less was in the range of 12 to 30 mass%. Further, these polyphenylene ether powders exhibited excellent solvent solubility. In addition, a covering film having excellent mechanical strength could also be formed using the polyphenylene ether powders obtained in Examples 1 to 7.

### <Examples 8 to 23>

A 40 L jacketed polymerization tank equipped with, at the bottom of the polymerization tank, a sparger for introducing an oxygen-containing gas, a stirring turbine blade, and a baffle, and, in a vent gas line at the upper portion of the polymerization tank, a reflux condenser, was charged in the amounts shown in Tables 2 and 3 with copper(II) oxide, an aqueous solution of 47 mass% hydrogen bromide, di-t-butylethylenediamine, di-n-butylamine, butyldimethylamine, toluene, and 2,6-dimethylphenol, while blowing nitrogen gas at a flow rate of 0.5 L/min. The resultant mixture was then stirred until it became a uniform solution and the internal temperature of the polymerization tank was 25°C.

Next, simultaneously with the introduction of dry air into the polymerization tank by the sparger at the rate shown in Tables 2 and 3, the solution formed from toluene, 2,6-dimethylphenol, and butyldimethylamine shown in Tables 2 and 3 was added by a plunger pump into the polymerization tank over the extra addition time shown in Tables 2 and 3. Dry air was fed for the aeration time shown in Tables 2 and 3 to obtain a polymerization mixture. Control was performed so that the internal temperature when polymerization finished was 40°C. The polymerization mixture when polymerization finished was in a solution state.

The aeration with the dry air was stopped, and to the polymerization mixture was then added 10 kg of an aqueous solution of 2.5 mass% tetrasodium ethylenediaminetetraacetate (a reagent manufactured by Dojindo Laboratories). The polymerization mixture was stirred for 150 minutes at 70°C, then left to stand for 20 minutes, so that the organic phase and the aqueous phase were separated by liquid-liquid separation.

The organic phase included polyphenylene ether and toluene (boiling point: 110.6°C).

The obtained organic phase was heated to 120°C, and toluene vapor was extracted out of the system to enrich the polyphenylene ether until the concentration of polyphenylene ether (PPE) in the organic phase reached the value shown in Tables 2 and 3.

Further, methanol was added to the enriched organic phase to produce a slurry in which polyphenylene ether had precipitated. During this operation, control was performed so that the slurry temperature was 55°C. The polyphenylene ether concentration (PPE concentration) in the slurry was as shown in Tables 2 and 3.

Then, the slurry was filtered through a basket frame (Model 0-15, manufactured by Tanabe Willtec Inc.). After filtering, the excess methanol was added into the basket frame, and filtering was then carried out again to obtain wet polyphenylene ether.

Next, the wet polyphenylene ether was milled by charging into a feather mill (FM-1S, manufactured by Hosokawa Micron Corporation) in which a 10 mm round hole mesh was set. The wet polyphenylene ether was held for 1.5 hours at 150°C and 1 mmHg to obtain a dry polyphenylene ether powder. The obtained polyphenylene ether powder was subjected to the respective measurements based on the methods described above. The results are collectively shown in Tables 2 and 3.

**[Table 2]**

| | | | Example 8 | Example 9 | Example 10 | Example 11 | Example 12 | Example 13 | Example 14 | Example 15 |
|---|---|---|---|---|---|---|---|---|---|---|
| Initial Charging | Copper(II) oxide | [g] | 4.57 | 4.57 | 4.57 | 4.57 | 4.57 | 4.57 | 4.57 | 4.57 |
| | Aqueous solution of 47 mass% hydrogen bromide | [g] | 24.18 | 24.18 | 24.18 | 24.18 | 24.18 | 24.18 | 24.18 | 24.18 |
| | Di-t-butylethylenediamine | [g] | 11 | 11 | 11 | 11 | 11 | 11 | 11 | 11 |
| | Di-n-butylamine | [g] | 62.72 | 62.72 | 62.72 | 62.72 | 62.72 | 62.72 | 62.72 | 62.72 |
| | Butyldimethylamine | [g] | 149.92 | 149.92 | 149.92 | 149.92 | 149.92 | 149.92 | 149.92 | 149.92 |
| | Toluene | [Kg] | 20.65 | 20.65 | 20.65 | 20.65 | 20.65 | 20.65 | 20.65 | 20.65 |
| | 2,6-Dimethylphenol | [Kg] | 3.12 | 3.12 | 3.12 | 3.12 | 3.12 | 3.12 | 3.12 | 3.12 |
| | Dry air introduction rate | [NL/min] | 32.8 | 32.8 | 32.8 | 32.8 | 32.8 | 32.8 | 32.8 | 32.8 |
| | Dry air aeration time | [min] | 86 | 86 | 86 | 86 | 86 | 86 | 86 | 86 |
| Extra Solution | Toluene | [Kg] | 3.12 | 3.12 | 3.12 | 3.12 | 3.12 | 3.12 | 3.12 | 3.12 |
| | 2,6-Dimethylphenol | [Kg] | 1.62 | 1.62 | 1.62 | 1.62 | 1.62 | 1.62 | 1.62 | 1.62 |
| | Butyldimethylamine | [g] | 21.56 | 21.56 | 21.56 | 21.56 | 21.56 | 21.56 | 21.56 | 21.56 |
| | Extra addition time | [min] | 30 | 30 | 30 | 30 | 30 | 30 | 30 | 30 |
| Precipitation Conditions | PPE concentration in organic phase | [mass%] | 36.5 | 33 | 33 | 33 | 33 | 33 | 31 | 31 |
| | Slurry temperature | [°C] | 55 | 55 | 55 | 55 | 55 | 55 | 55 | 55 |
| | PPE concentration in slurry | [mass%] | 21.5 | 21.5 | 20.5 | 23.5 | 19 | 27 | 17.5 | 27.5 |
| Milling Conditions | Feather mill round hole mesh size | [mm] | 10 | 10 | 10 | 10 | 10 | 10 | 10 | 10 |
| Evaluation Results | Molecular weight of 50,000 or more | [mass%] | 8 | 8 | 8 | 8 | 8 | 8 | 8 | 8 |
| | Molecular weight of 8,000 or less | [mass%] | 18 | 17.5 | 17 | 18.5 | 16 | 22 | 16.5 | 22 |
| | Mn | | 11000 | 11050 | 11100 | 10950 | 11150 | 10500 | 11100 | 10500 |
| | Reduced viscosity | [dl/g] | 0.34 | 0.34 | 0.34 | 0.34 | 0.34 | 0.33 | 0.35 | 0.33 |
| | Loose apparent specific gravity | [g/cc] | 0.58 | 0.49 | 0.49 | 0.49 | 0.48 | 0.44 | 0.41 | 0.42 |
| | Solvent solubility | | ○ | ○ | ○ | ○ | ○ | ○ | ○ | ○ |
| | Covering film strength | | ○ | ○ | ○ | ○ | ○ | ○ | ○ | ○ |

**[Table 3]**

| | | | Example 16 | Example 17 | Example 18 | Example 19 | Example 20 | Example 21 | Example 22 | Example 23 |
|---|---|---|---|---|---|---|---|---|---|---|
| Initial Charging | Copper(II) oxide | [g] | 4.57 | 4.57 | 4.57 | 4.57 | 4.57 | 4.57 | 4.57 | 4.57 |
| | Aqueous solution of 47 mass% hydrogen bromide | [g] | 24.18 | 24.18 | 24.18 | 24.18 | 24.18 | 24.18 | 24.18 | 24.18 |
| | Di-t-butylethylenediamine | [g] | 11 | 11 | 11 | 11 | 11 | 11 | 11 | 11 |
| | Di-n-butylamine | [g] | 62.72 | 62.72 | 62.72 | 62.72 | 62.72 | 62.72 | 62.72 | 62.72 |
| | Butyldimethylamine | [g] | 149.92 | 149.92 | 149.92 | 149.92 | 149.92 | 149.92 | 149.92 | 149.92 |
| | Toluene | [Kg] | 20.65 | 20.65 | 20.65 | 20.65 | 20.65 | 20.65 | 20.65 | 20.65 |
| | 2,6-Dimethylphenol | [Kg] | 3.12 | 3.12 | 3.12 | 3.12 | 3.12 | 3.12 | 3.12 | 3.12 |
| | Dry air introduction rate | [NL/min] | 32.8 | 32.8 | 32.8 | 32.8 | 32.8 | 32.8 | 32.8 | 32.8 |
| | Dry air aeration time | [min] | 86 | 86 | 86 | 86 | 86 | 86 | 86 | 86 |
| Extra Solution | Toluene | [Kg] | 3.12 | 3.12 | 3.12 | 3.12 | 3.12 | 3.12 | 3.12 | 3.12 |
| | 2,6-Dimethylphenol | [Kg] | 1.62 | 1.62 | 1.62 | 1.62 | 1.62 | 1.62 | 1.62 | 1.62 |
| | Butyldimethylamine | [g] | 21.56 | 21.56 | 21.56 | 21.56 | 21.56 | 21.56 | 21.56 | 21.56 |
| | Extra addition time | [min] | 30 | 30 | 30 | 30 | 30 | 30 | 30 | 30 |
| Precipitation Conditions | PPE concentration in organic phase | [mass%] | 39 | 38 | 38 | 38 | 40.5 | 40.5 | 40.5 | 40.5 |
| | Slurry temperature | [°C] | 55 | 55 | 55 | 55 | 55 | 55 | 55 | 55 |
| | PPE concentration in slurry | [mass%] | 22 | 19 | 27.5 | 16.5 | 22 | 27 | 19 | 17 |
| Milling Conditions | Feather mill round hole mesh size | [mm] | 10 | 10 | 10 | 10 | 10 | 10 | 10 | 10 |
| Evaluation Results | Molecular weight of 50,000 or more | [mass%] | 8 | 8 | 8 | 8 | 8 | 8 | 8 | 8 |
| | Molecular weight of 8,000 or less | [mass%] | 23 | 22.5 | 25 | 21 | 23 | 27.5 | 21 | 19 |
| | Mn | | 10300 | 10400 | 10050 | 10550 | 10280 | 10000 | 10300 | 10900 |
| | Reduced viscosity | [dl/g] | 0.33 | 0.33 | 0.32 | 0.33 | 0.33 | 0.31 | 0.33 | 0.34 |
| | Loose apparent specific gravity | [g/cc] | 0.59 | 0.55 | 0.45 | 0.41 | 0.49 | 0.48 | 0.49 | 0.47 |
| | Solvent solubility | | ○ | ○ | ○ | ○ | ○ | ○ | ○ | ○ |
| | Covering film strength | | ○ | ○ | ○ | ○ | ○ | ○ | ○ | ○ |

The polyphenylene ether powders obtained in Examples 8 to 23 were polyphenylene ether powders having a low molecular weight in which the component having a molecular weight of 50,000 or more was in the range of 5 to 20 mass% and the component having a molecular weight of 8,000 or less was in the range of 12 to 30 mass%. Further, these polyphenylene ether powders exhibited excellent solvent solubility. In addition, a covering film having excellent mechanical strength could also be formed using the polyphenylene ether powders obtained in Examples 8 to 23.

### <Comparative Example 1>

Operations up to the production of the slurry in which polyphenylene ether had precipitated were carried out in the same manner as in Example 1. Then, the produced slurry was filtered through a glass filter. After filtering, the resultant was dispersed in excess methanol, and then the resultant mixture was filtered again to obtain wet polyphenylene ether. The wet polyphenylene ether was held for 1.5 hours at 150°C and 1 mmHg to obtain a dry polyphenylene ether powder. The obtained polyphenylene ether powder was subjected to the respective measurements based on the methods described above. The results are shown in Table 4. Since the obtained polyphenylene ether powder had a low loose apparent specific gravity, when the solvent solubility test was performed, the polyphenylene ether powder had to be charged slowly so that it did not brim over the container.

### <Comparative Examples 2 to 8>

A 40 L jacketed polymerization tank equipped with, at the bottom of the polymerization tank, a sparger for introducing an oxygen-containing gas, a stirring turbine blade, and a baffle, and, in a vent gas line at the upper portion of the polymerization tank, a reflux condenser, was charged in the amounts shown in Table 4 with copper(II) oxide, an aqueous solution of 47 mass% hydrogen bromide, di-t-butylethylenediamine, di-n-butylamine, butyldimethylamine, toluene, and 2,6-dimethylphenol, while blowing nitrogen gas at a flow rate of 0.5 L/min. The resultant mixture was then stirred until it became a uniform solution and the internal temperature of the polymerization tank was 25°C.

Next, simultaneously with the introduction of dry air into the polymerization tank by the sparger at the rate shown in Table 4, the solution formed from toluene, 2,6-dimethylphenol, and butyldimethylamine shown in Table 4 was added by a plunger pump into the polymerization tank over the extra addition time shown in Table 4. Dry air was fed for the aeration time shown in Table 4 to obtain a polymerization mixture. Control was performed so that the internal temperature when polymerization finished was 40°C. The polymerization mixture when polymerization finished was in a solution state.

The aeration with the dry air was stopped, and to the polymerization mixture was then added 10 kg of an aqueous solution of 2.5 mass% tetrasodium ethylenediaminetetraacetate (a reagent manufactured by Dojindo Laboratories). The polymerization mixture was stirred for 150 minutes at 70°C, then left to stand for 20 minutes, so that the organic phase and the aqueous phase were separated by liquid-liquid separation.

The organic phase included polyphenylene ether and toluene (boiling point: 110.6°C).

The obtained organic phase was heated to 120°C, and toluene vapor was extracted out of the system until the concentration of polyphenylene ether (PPE) in the organic phase reached an enrichment level of 36 mass%.

The obtained organic phase was cooled to room temperature, and then methanol was added to produce a slurry in which polyphenylene ether had precipitated. During this operation, the slurry temperature was 55°C, and the polyphenylene ether (PPE) concentration in the slurry was 21 mass%.

Then, the slurry was filtered through a basket frame (Model 0-15, manufactured by Tanabe Willtec Inc.). After filtering, the excess methanol was added into the basket frame, and filtering was then carried out again to obtain wet polyphenylene ether.

Next, the wet polyphenylene ether was milled by charging into a feather mill (FM-1S, manufactured by Hosokawa Micron Corporation) in which a 10 mm round hole mesh was set. The wet polyphenylene ether was held for 1.5 hours at 150°C and 1 mmHg to obtain a dry polyphenylene ether powder. The obtained polyphenylene ether powder was subjected to the respective measurements based on the methods described above. The results are collectively shown in Table 4.

**[Table 4]**

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Initial Charging | Copper(II) oxide | [g] | 4.57 | 4.57 | 4.57 | 4.57 | 9.28 | 4.57 | 4.57 | 4.57 |
| | Aqueous solution of 47 mass% hydrogen bromide | [g] | 24.18 | 24.18 | 24.18 | 24.18 | 69.744 | 24.18 | 24.18 | 24.18 |
| | Di-t-butylethylenediamine | [g] | 11 | 11 | 11 | 11 | 22.346 | 11 | 11 | 11 |
| | Di-n-butylamine | [g] | 62.72 | 62.72 | 62.72 | 62.72 | 108.2 | 62.72 | 62.72 | 62.72 |
| | Butyldimethylamine | [g] | 149.92 | 149.92 | 149.92 | 149.92 | 329.26 | 149.92 | 128.14 | 14.27 |
| | Toluene | [Kg] | 20.65 | 20.65 | 20.65 | 20.65 | 16.26 | 20.65 | 17.53 | 16.15 |
| | 2,6-Dimethylphenol | [Kg] | 3.12 | 3.12 | 3.12 | 3.12 | 7.2 | 3.12 | 1.5 | 1.5 |
| | Dry air introduction rate | [NL/min] | 32.8 | 32.8 | 32.8 | 32.8 | 75.7 | 32.8 | 32.8 | 40.4 |
| | Dry air aeration time | [min] | 86 | 125 | 185 | 71 | 120 | 51 | 72 | 120 |
| Extra Solution | Toluene | [Kg] | 0 | 0 | 0 | 0 | 0 | 0 | 3.12 | 3.12 |
| | 2,6-Dimethylphenol | [Kg] | 0 | 0 | 0 | 0 | 0 | 0 | 1.62 | 1.62 |
| | Butyldimethylamine | [g] | 0 | 0 | 0 | 0 | 0 | 0 | 21.56 | 128.43 |
| | Extra addition time | [min] | - | - | - | - | - | - | 30 | 30 |
| | Amount of pure oxygen introduced per mol of 2,6-dimethylphenol | [NL] | 23 | 34 | 50 | 19 | 32 | 14 | 19 | 40 |
| Precipitation conditions | PPE concentration in organic phrase | [mass%] | 36 | 36 | 36 | 36 | 36 | 36 | 36 | 36 |
| | Slurry temperature | [°C] | 55 | 55 | 55 | 55 | 55 | 55 | 55 | 55 |
| | PPE concentration in slurry | [mass%] | 21 | 21 | 21 | 21 | 21 | 21 | 21 | 21 |
| Evaluation Results | Molecular weight of 50,000 or more | [mass%] | 12 | 23 | 43 | 3 | 24 | 0 | 6 | 20 |
| | Molecular weight of 8,000 or less | [mass%] | 22 | 10 | 6 | 38 | 35 | 65 | 31 | 11 |
| | Mn | | 11000 | 16000 | 21000 | 7000 | 11000 | 3000 | 8300 | 13300 |
| | Reduced viscosity | [dl/g] | 0.34 | 0.44 | 0.52 | 0.22 | 0.34 | 0.15 | 0.25 | 0.41 |
| | Loose apparent specific gravity | [g/cc] | 0.37 | 0.51 | 0.50 | 0.44 | 0.51 | 0.32 | 0.48 | 0.49 |
| | Solvent solubility | | Δ | × | × | ○ | × | ○ | Δ | Δ |
| | Covering film strength | | ○ | ○ | ○ | × | ○ | × | × | ○ |

The polyphenylene ether powders obtained in Comparative Examples 1 and 6 exhibited poor handleability, as since they had a low loose apparent specific gravity, care was required in the operations performed during solvent dissolution. Especially, Comparative Example 1 also had a high molecular weight, so that its solvent solubility was poor. Further, although the polyphenylene ether powders obtained in Comparative Examples 2 and 3 could form a covering film having a high molecular weight and excellent mechanical strength, solvent solubility was poor, so that dissolution in the solvent did not proceed smoothly. For the polyphenylene ether powders obtained in Comparative Examples 4, 6, and 7, the strength of the covering film was insufficient, and the color of the surface of the covering film was tinged yellow. The reason why the color of the surface of the covering film was tinged yellow is thought by the inventors to be because of the large number of phenolic hydroxyl groups. The polyphenylene ether powders obtained in Comparative Examples 5 and 8 exhibited a deterioration in solvent solubility.

### <Comparative Example 9>

A 1.6 L jacketed first polymerization tank equipped with, at the bottom of the polymerization tank, a sparger for introducing an oxygen-containing gas, a stirring turbine blade, and a baffle, in a vent gas line at the upper portion of the polymerization tank, a reflux condenser, and at a side face of the polymerization tank, an overflow line to a second polymerization tank, was charged with 0.239 g of copper(II) chloride dihydrate, 1.122 g of 35 mass% hydrochloric acid, 3.531 g of di-n-butylamine, 18.154 g of N,N,N',N'-tetramethylpropanediamine, 445.1 g of xylene, 170.8 g of n-butanol, and 509.5 g of methanol, while blowing nitrogen gas at a flow rate of 500 mL/min.

Similarly, a 4.0 L jacketed second polymerization tank equipped with, at the bottom of the polymerization tank, a sparger for introducing an oxygen-containing gas, a stirring turbine blade, and a baffle, in a vent gas line at the upper portion of the polymerization tank, a reflux condenser, and at a side face of the polymerization tank, an overflow line to a washing tank, was charged with 1,007.8 g of xylene, 578.4 g of n-butanol, and 309.5 g of methanol, while blowing nitrogen gas at a flow rate of 1,000 mL/min.

Further, a 6.0 L first raw materials tank equipped with a line capable of sending raw materials to the first polymerization tank by a plunger pump, a stirring turbine blade, and a reflux condenser in a vent gas line at the upper portion of the tank, was charged with 0.642 g of copper(II) chloride dihydrate, 2.287 g of 35 mass% hydrochloric acid, 9.247 g of di-n-butylamine, 24.519 g of N,N,N',N'-tetramethylpropanediamine, 1,206.5 g of xylene, 854.5 g of n-butanol, 962.2 g of methanol, and 920.0 g of 2,6-dimethylphenol, while blowing nitrogen gas at a flow rate of 500 mL/min from a nitrogen gas flow inlet. The resultant solution was mixed by stirring to obtain a polymerization solution. Since the amount of charged solution in the first raw materials tank decreases when the solution is supplied to the polymerization tank, extra solution having the above-described composition was added as required to the first raw materials tank.

Next, the polymerization solution was supplied from the first raw materials tank to the vigorously-stirred first polymerization tank at a flow rate of 19.42 g/min, and at the same time the introduction of oxygen was started from the sparger into the first polymerization tank at a rate of 329.42 mL/min. Further, at the same time that the overflow from the first polymerization tank to the second polymerization tank started, the oxygen was introduced from the sparger into the second polymerization tank at a rate of 32.4 mL/min. The polymerization temperature was regulated by passing a heat medium through the jacket so as to maintain both the first polymerization tank and the second polymerization tank at 30°C. The overflow from the second polymerization tank was recovered in a recovery vessel.

After 40 hours the overflowed slurry began to be recovered. Polymerization was then continued for 23 hours to complete polymerization. The obtained polyphenylene ether slurry was about 26.8 kg.

A 10 L jacketed tank equipped with a stirring turbine blade, a baffle, and in a vent gas line at the upper portion of the tank, a reflux condenser, was charged with 1/4 (6.7 kg) of the thus-obtained polyphenylene ether slurry, then 70 g of an aqueous solution of 10% tripotassium ethylenediaminetetraacetate (reagent manufactured by Dojindo Laboratories) was added, and the resultant mixture was heated to 50°C.

Next, hydroquinone (reagent manufactured by Wako Pure Chemical Industries, Ltd.) was added in small amounts bit by bit, and the maintaining of the temperature at 50°C was continued until the slurry-like polyphenylene ether turned white. The white slurry-like polyphenylene ether was filtered. Methanol was added to the filtrate polyphenylene ether to carry out a washing treatment, whereby a polyphenylene ether powder was obtained.

The same treatment was carried out on the remaining polyphenylene ether slurry to obtain about 6 kg of polyphenylene ether powder in total. The obtained polyphenylene ether powder was subjected to the respective measurements based on the methods described above. The results are shown in Table 5.

**[Table 5]**

| | | | Comparative Example 9 |
|---|---|---|---|
| Evaluation Results | Molecular weight of 50,000 or more | [mass%] | 7 |
| | Molecular weight of 8,000 or less | [mass%] | 7 |
| | Mn | | 11500 |
| | Reduced viscosity | [dl/g] | 0.35 |
| | Loose apparent specific gravity | [g/cc] | 0.51 |
| | Solvent solubility | | × |
| | Covering film strength | | ○ |

The polyphenylene ether powder obtained in Comparative Example 9 had a high loose apparent specific gravity and could form a release film having excellent mechanical strength. However, the ratio of the low molecular weight component having a molecular weight of 8,000 or less was low, and it was confirmed that insoluble matter remained during solvent dissolution.

### <Comparative Example 10>

A catalyst solution was obtained by dissolving 0.02 kg of copper(II) bromide in 0.35 kg of dibutylamine and 8 kg of toluene. To this catalyst solution was added a solution in which 2 kg of 2,6-dimethylphenol had been dissolved in 5 kg of toluene. Using these mixed solutions, polymerization was carried out at 40°C in a reactor for 3 hours while supplying oxygen. After the reaction was stopped, the reaction solution was brought into contact with water to remove the catalyst from the reaction solution, to obtain a polyphenylene ether polymerization reaction solution. The concentration of polyphenylene ether in the polyphenylene ether polymerization reaction solution was 13.3 mass%. While adding this polyphenylene ether polymerization reaction solution into methanol and stirring, the polyphenylene ether was made to precipitate and form a deposit. Then, liquid was separated from the polyphenylene ether polymerization reaction solution with a solid-liquid separator, to obtain a wet solid. The liquid content of this wet solid was 60 mass%. Further, the ratio of particles 106 µm or less in size in this wet solid was, based on 100 mass% of all the particles, 77 mass%.

Water was added into 1 kg of the wet solid obtained by the above-described method to obtain an aqueous dispersion. While stirring, this aqueous dispersion was added into 80°C hot water. The weight ratio of polyphenylene ether wet solid/water at this stage was 0.01. Wet milling was carried out by, while removing the solvents toluene and methanol by distillation by heating the aqueous dispersion, circulating the solution through a wet milling machine (trade name: Gorator) in an amount 20 times that of the total aqueous dispersion per hour. After performing this removal by distillation of the solvents and wet milling for 1 hour, the aqueous dispersion was extracted. This solution was subjected to solid-liquid separation, to obtain a polyphenylene ether wet solid. This polyphenylene ether wet solid was dried for 6 hours under a nitrogen flow at 140°C, to obtain a polyphenylene ether powder. The loose apparent specific gravity and the solubility of the obtained polyphenylene ether powder were measured based on the methods described above. The results are shown in Table 6.

### <Comparative Example 11>

A polyphenylene ether powder was obtained in the same manner as in <Comparative Example 10>, except that the weight ratio of polyphenylene ether wet solid/water was set at 0.5, and the circulation through a wet milling machine was carried out in an amount 0.1 times that of the total aqueous dispersion per hour. The loose apparent specific gravity and the solvent solubility of the obtained polyphenylene ether powder were measured based on the methods described above. The results are shown in Table 6.

### <Comparative Example 12>

A polyphenylene ether powder was obtained in the same manner as in <Comparative Example 10>, except that the weight ratio of polyphenylene ether wet solid/water was set at 0.5, and the circulation through a wet milling machine was carried out in an amount 40 times that of the total aqueous dispersion per hour. The loose apparent specific gravity and the solvent solubility of the obtained polyphenylene ether powder were measured based on the methods described above. The results are shown in Table 6.

### <Comparative Example 13>

A polyphenylene ether powder was obtained in the same manner as in <Comparative Example 10>, except that the weight ratio of polyphenylene ether wet solid/water was set at 0.5, and the circulation through a wet milling machine was carried out in an amount 20 times that of the total aqueous dispersion per hour. The loose apparent specific gravity and the solvent solubility of the obtained polyphenylene ether powder were measured based on the methods described above. The results are shown in Table 6.

### <Comparative Example 14>

A catalyst solution was obtained by dissolving 0.02 kg of copper(II) bromide in 0.35 kg of dibutylamine and 8 kg of toluene. To this catalyst solution was added a solution in which 2 kg of 2,6-dimethylphenol had been dissolved in 5 kg of toluene. Using these mixed solutions, polymerization was carried out at 40°C in a reactor for 3 hours while supplying oxygen. After the reaction was stopped, the reaction solution was brought into contact with water to remove the catalyst from the reaction solution, to obtain a polymerization reaction solution in which polyphenylene ether was uniformly dissolved. While stirring, this polyphenylene ether polymerization reaction solution was added into 90°C hot water. The weight ratio of polyphenylene ether polymerization reaction solution/water at this stage was 0.1. Wet milling was carried out for 1 hour by, while maintaining this aqueous dispersion at 90°C, circulating the solution through a wet milling machine (trade name: Golatol) in an amount 20 times that of the total aqueous dispersion per hour, and then the aqueous dispersion was extracted. This aqueous dispersion was subjected to solid-liquid separation, to obtain a polyphenylene ether wet solid. This polyphenylene ether wet solid was dried, to obtain a polyphenylene ether powder. The loose apparent specific gravity and the solvent solubility of the dried polyphenylene ether powder were measured based on the methods described above. The results are shown in Table 6.

### <Comparative Example 15>

A polyphenylene ether powder was obtained in the same manner as in <Comparative Example 14>, except that the weight ratio of polyphenylene ether polymerization reaction solution/water was set at 0.005, and the circulation through the wet milling machine (trade name: Golatol) was carried out in an amount 20 times that of the total aqueous dispersion per hour. The loose apparent specific gravity and the solvent solubility of the obtained polyphenylene ether powder were measured based on the methods described above. The results are shown in Table 6.

**[Table 6]**

| | | Comparative Example 10 | Comparative Example 11 | Comparative Example 12 | Comparative Example 13 | Comparative Example 14 | Comparative Example 15 |
|---|---|---|---|---|---|---|---|
| Loose apparent specific gravity | [g/cc] | 0.34 | 0.33 | 0.37 | 0.39 | 0.39 | 0.32 |
| Solvent solubility | | ○ | ○ | Δ | Δ | Δ | ○ |

Although the polyphenylene ether powders obtained in Comparative Examples 10 to 15 cannot all be said to exhibit poor solvent solubility, since loose apparent specific gravity was poor, these polyphenylene ether powders had poor handleability.

### <Examples 24 to 29>

Examples 24 to 29 were carried out in the same manner as in Example 16, except that the slurry temperature when precipitating the polyphenylene ether was controlled to the temperature shown in Table 7. The evaluation results are shown in Table 7.

**[Table 7]**

| | | | Example 24 | Example 25 | Example 26 | Example 27 | Example 28 | Example 29 |
|---|---|---|---|---|---|---|---|---|
| Initial Charging | Copper(II) oxide | [g] | 4.57 | 4.57 | 4.57 | 4.57 | 4.57 | 4.57 |
| | Aqueous solution of 47 mass% hydrogen bromide | [g] | 24.18 | 24.18 | 24.18 | 24.18 | 24.18 | 24.18 |
| | Di-t-butylethylenediamine | [g] | 11 | 11 | 11 | 11 | 11 | 11 |
| | Di-n-butylamine | [g] | 62.72 | 62.72 | 62.72 | 62.72 | 62.72 | 62.72 |
| | Butyldimethylamine | [g] | 149.92 | 149.92 | 149.92 | 149.92 | 149.92 | 149.92 |
| | Toluene | [Kg] | 20.65 | 20.65 | 20.65 | 20.65 | 20.65 | 20.65 |
| | 2,6-Dimethylphenol | [Kg] | 3.12 | 3.12 | 3.12 | 3.12 | 3.12 | 3.12 |
| | Dry air introduction rate | [NL/min] | 32.8 | 32.8 | 32.8 | 32.8 | 32.8 | 32.8 |
| | Dry air aeration time | [min] | 86 | 86 | 86 | 86 | 86 | 86 |
| Extra Solution | Toluene | [Kg] | 3.12 | 3.12 | 3.12 | 3.12 | 3.12 | 3.12 |
| | 2,6-Dimethylphenol | [Kg] | 1.62 | 1.62 | 1.62 | 1.62 | 1.62 | 1.62 |
| | Butyldimethylamine | [g] | 21.56 | 21.56 | 21.56 | 21.56 | 21.56 | 21.56 |
| | Extra addition time | [min] | 30 | 30 | 30 | 30 | 30 | 30 |
| Precipitation Conditions | PPE concentration in organic phase | [mass%] | 39 | 39 | 39 | 39 | 39 | 39 |
| | Slurry temperature during precipitation | [°C] | 42 | 58 | 22 | 62 | 2 | 63 |
| | PPE concentration in slurry | [mass%] | 22 | 22 | 22 | 22 | 22 | 22 |
| Milling Conditions | Feather mill round hole mesh size | [mm] | 10 | 10 | 10 | 10 | 10 | 10 |
| Evaluation Results | Molecular weight of 50,000 or more | [mass%] | 8 | 8 | 8 | 8 | 8 | 8 |
| | Molecular weight of 8,000 or less | [mass%] | 24 | 18 | 25 | 16.5 | 28 | 13.5 |
| | Mn | | 10300 | 11000 | 10050 | 11200 | 9500 | 11150 |
| | Reduced viscosity | [dl/g] | 0.33 | 0.34 | 0.31 | 0.33 | 0.29 | 0.34 |
| | Loose apparent specific gravity | [g/cc] | 0.56 | 0.57 | 0.48 | 0.47 | 0.42 | 0.45 |
| | Solvent solubility | | ○ | ○ | ○ | ○ | ○ | ○ |
| | Covering film strength | | ○ | ○ | ○ | ○ | ○ | ○ |

The polyphenylene ether powders obtained in Examples 24 to 29 were polyphenylene ether powders having a low molecular weight in which the component having a molecular weight of 50,000 or more was in the range of 5 to 20 mass% and the component having a molecular weight of 8,000 or less was in the range of 12 to 30 mass%. Further, these polyphenylene ether powders exhibited excellent solvent solubility. In addition, the polyphenylene ether powders obtained in Examples 24 to 29 could also form a covering film having excellent mechanical strength.

### <Comparative Examples 16 to 23>

Comparative Examples 16 to 23 were carried out in the same manner as in Example 16, except that the PPE concentration in the organic phase and the PPE concentration in the slurry were changed as shown in Table 8. The evaluation results are shown in Table 8.

**[Table 8]**

| | | | Comparative Example 16 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|
| Initial Charging | Copper(II) oxide | [g] | 4.57 | 4.57 | 4.57 | 4.57 | 4.57 | 4.57 | 4.57 | 4.57 |
| | Aqueous solution of 47 mass% hydrogen bromide | [g] | 24.18 | 24.18 | 24.18 | 24.18 | 24.18 | 24.18 | 24.18 | 24.18 |
| | Di-t-butylethylenediamine | [g] | 11 | 11 | 11 | 11 | 11 | 11 | 11 | 11 |
| | Di-n-butylamine | [g] | 62.72 | 62.72 | 62.72 | 62.72 | 62.72 | 62.72 | 62.72 | 62.72 |
| | Butyldimethylamine | [g] | 149.92 | 149.92 | 149.92 | 149.92 | 149.92 | 149.92 | 149.92 | 149.92 |
| | Toluene | [Kg] | 20.65 | 20.65 | 20.65 | 20.65 | 20.65 | 20.65 | 20.65 | 20.65 |
| | 2,6-Dimethylphenol | [Kg] | 3.12 | 3.12 | 3.12 | 3.12 | 3.12 | 3.12 | 3.12 | 3.12 |
| | Dry air introduction rate | [NL/min] | 32.8 | 32.8 | 32.8 | 32.8 | 32.8 | 32.8 | 32.8 | 32.8 |
| | Dry air aeration time | [min] | 86 | 86 | 86 | 86 | 86 | 86 | 86 | 86 |
| Extra Solution | Toluene | [Kg] | 3.12 | 3.12 | 3.12 | 3.12 | 3.12 | 3.12 | 3.12 | 3.12 |
| | 2,6-Dimethylphenol | [Kg] | 1.62 | 1.62 | 1.62 | 1.62 | 1.62 | 1.62 | 1.62 | 1.62 |
| | Butyldimethylamine | [g] | 21.56 | 21.56 | 21.56 | 21.56 | 21.56 | 21.56 | 21.56 | 21.56 |
| | Extra addition time | [min] | 30 | 30 | 30 | 30 | 30 | 30 | 30 | 30 |
| Precipitation Conditions | PPE concentration in organic phase | [mass%] | 46 | 46 | 39 | 39 | 24 | 24 | 33.5 | 33.5 |
| | Slurry temperature | [°C] | 55 | 55 | 55 | 55 | 55 | 55 | 55 | 55 |
| | PPE concentration in slurry | [mass%] | 17 | 33 | 13 | 32 | 22 | 17 | 13 | 32 |
| Milling Conditions | Feather mill round hole mesh size | [mm] | 10 | 10 | 10 | 10 | 10 | 10 | 10 | 10 |
| Evaluation Results | Molecular weight of 50,000 or more | [mass%] | 8 | 8 | 8 | 6.8 | 7.5 | 8 | 8 | 4.8 |
| | Molecular weight of 8,000 or less | [mass%] | 32.5 | 29.5 | 35 | 12.9 | 16.5 | 19.5 | 30.1 | 11 |
| | Mn | | 9000 | 9300 | 8500 | 11000 | 10900 | 10900 | 9200 | 10800 |
| | Reduced viscosity | [dl/g] | 0.28 | 0.29 | 0.25 | 0.34 | 0.34 | 0.34 | 0.29 | 0.33 |
| | Loose apparent specific gravity | [g/cc] | 0.49 | 0.39 | 0.42 | 0.39 | 0.32 | 0.33 | 0.47 | 0.41 |
| | Solvent solubility | | × | Δ | Δ | Δ | ○ | ○ | × | Δ |
| | Covering film strength | | ○ | ○ | ○ | ○ | ○ | ○ | ○ | ○ |

In Comparative Example 16, the slurry during polyphenylene ether precipitation had a low polyphenylene ether (PPE) concentration and a methanol rich composition, so that the ratio of the component having a molecular weight of 8,000 or less in the obtained polyphenylene ether powder was not within the scope according to the present application, and although the loose apparent specific gravity was high, solvent solubility was poor. In Comparative Example 17, since the slurry during polyphenylene ether precipitation had a high polyphenylene ether (PPE) concentration and was toluene rich, the obtained polyphenylene ether powder had an insufficient loose apparent specific gravity, and insoluble matter remained during dissolution in the solvent. In Comparative Example 18, the slurry during polyphenylene ether precipitation was methanol rich, so that the ratio of the component having a molecular weight of 8,000 or less was not within the scope according to the present application, and although the obtained polyphenylene ether powder had a high loose apparent specific gravity, insoluble matter remained during solvent dissolution. In Comparative Example 19, the slurry during polyphenylene ether precipitation had a toluene rich composition, the obtained polyphenylene ether powder had a low loose apparent specific gravity, and insoluble matter also remained during solvent dissolution. In Comparative Examples 20 and 21, the slurry during polyphenylene ether precipitation had a toluene rich composition, the obtained polyphenylene ether powder had a low loose apparent specific gravity, and handleability was poor. In Comparative Example 22, the slurry during polyphenylene ether precipitation had a methanol rich composition, so that the ratio of the component having a molecular weight of 8,000 or less in the obtained polyphenylene ether powder was not within the scope according to the present application, and solvent solubility was poor. In Comparative Example 23, the slurry during polyphenylene ether precipitation had a toluene rich composition, so that the ratio of the component having a molecular weight of 8,000 or less in the obtained polyphenylene ether powder was not within the scope according to the present application, and although the loose apparent specific gravity was high, insoluble matter remained during solvent dissolution.

### <Example 30>

80 mass% of the polyphenylene ether powder obtained in Example 5 and 20 mass% of glass fiber were melt-kneaded in a twin-screw extruder to produce pellets of a glass fiber-reinfored polyphenylene ether resin composition. The resin temperature at this stage was 344°C. Using this glass fiber-reinfored polyphenylene ether resin composition pellet, alkali resistance was evaluated based on the above-described method. The tensile strength before dipping in the aqueous solution of caustic soda was 88 MPa, and the tensile strength after dipping in the aqueous solution of caustic soda was 83 MPa. The retention rate of tensile strength before and after the dipping in the aqueous solution of caustic soda was 94.3%.

### <Comparative Example 24>

80 mass% of the polyphenylene ether powder obtained in Comparative Example 3 and 20 mass% of glass fiber were melt-kneaded in a twin-screw extruder to produce pellets of a glass fiber-reinforced polyphenylene ether resin composition. The resin temperature at this stage was 340°C. Using this glass fiber-reinforced polyphenylene ether resin composition pellet, alkali resistance was evaluated based on the above-described method. The tensile strength before dipping in the aqueous solution of caustic soda was 90 MPa, and the tensile strength after dipping in the aqueous solution of caustic soda was 72 MPa. The retention rate of tensile strength before and after the dipping in the aqueous solution of caustic soda was 80.0%.

Based on a comparison of Example 30 and Comparative Example 24, when the polyphenylene ether powder according to the present application is used, deterioration in the tensile strength before and after dipping in an aqueous solution of caustic soda can be greatly reduced, enabling it to be confirmed that alkali resistance was improved.

This application claims priority from Japanese Patent Application (No. 2010-230775) filed on October 13, 2010, which is incorporated by reference herein in its entirety.

### Industrial Applicability

The polyphenylene ether powder according to the present invention has industrially applicability as a material for automobile components, heat resistant components, components for electronic equipment, industrial components, covering agents, insulating films and the like.

## Claims

1. A polyphenylene ether powder which is a powder of a homopolymer and/or copolymer having a repeating unit structure represented by the following formula (1): 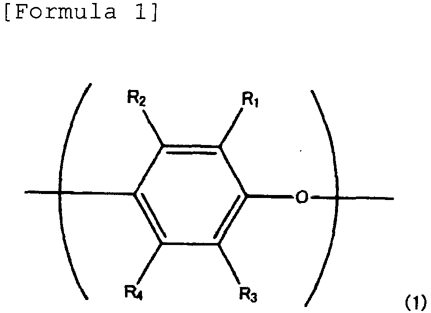 wherein R₁, R₂, R₃, and R₄ are each independently selected from the group consisting of a hydrogen atom, a halogen atom, an alkyl group having 1 to 7 carbon atoms, a phenyl group, a haloalkyl group, an aminoalkyl group, a hydrocarbon oxy group, and a halohydrocarbon oxy group in which a halogen atom is separated from an oxygen atom by at least two carbon atoms, has a loose apparent specific gravity of 0.40 or more and 0.85 or less, and comprises 5 to 20 mass% of a polyphenylene ether component having a molecular weight of 50,000 or more and 12 to 30 mass% of a polyphenylene ether component having a molecular weight of 8,000 or less, wherein the loose apparent specific gravity is measured with a powder tester and wherein quantification of the polyphenylene ether components is carried out using a calibration curve based on standard poylstyrene that was drawn using gel permeation chromatography.

2. The polyphenylene ether powder according to claim 1, which has a reduced viscosity (ηsp/c) measured in 0.5 g/dl chloroform solution at 30 °C of 0.20 dl/g or more and 0.43 dl/g or less.

3. A polyphenylene ether resin composition, comprising:
(a) the polyphenylene ether powder according to claim 1; and
(b) a good solvent for the polyphenylene ether powder.

4. The polyphenylene ether resin composition according to claim 3, wherein (b) the good solvent is one or more solvents selected from the group consisting of aromatic hydrocarbons, halogenated hydrocarbons, nitro compounds, aliphatic hydrocarbons, and ethers.

5. The polyphenylene ether resin composition according to claim 3 or 4, wherein a mass ratio ((a)/(b)) of (a) the polyphenylene ether powder to (b) the good solvent is 5/95 to 60/40.

6. A polyphenylene ether resin composition, comprising:
(a) the polyphenylene ether powder according to claim 1; and
(d) a filler.

7. The polyphenylene ether resin composition according to claim 6, wherein (d) the filler is one or more fillers selected from the group consisting of glass fibers, metal fibers, inorganic salts, wollastonite, kaolin, talc, calcium carbonate, silica, and titanium oxide.

8. A method for producing the polyphenylene ether powder according to claim 1 or 2, the method comprising:
step 1 of obtaining a solution (I) including polyphenylene ether and a good solvent by polymerizing a phenol compound while introducing oxygen in the presence of a catalyst in the good solvent for the polyphenylene ether;
step 2 of obtaining a solution (II) from the solution (I) obtained in step 1 in which a concentration of the polyphenylene ether has been adjusted to 25 mass% or more and 45 mass% or less;
step 3 of obtaining a slurry by mixing the solution (II) obtained in step 2 with a poor solvent for the polyphenylene ether and precipitating the polyphenylene ether; and
step 4 of milling a wet polyphenylene ether obtained by subjecting the slurry obtained in step 3 to solid-liquid separation, wherein
in step 1, an amount of oxygen introduced is 20 to 30 NL per mol of the phenol compound, and
in step 3, the polyphenylene ether concentration in the slurry when precipitating the polyphenylene ether is 15 mass% or more and 30 mass% or less.

9. The method for producing the polyphenylene ether powder according to claim 8, wherein in step 3 a slurry temperature when precipitating the polyphenylene ether is 0°C or more and 70°C or less.

## Patentansprüche

1. Polyphenylenetherpulver, wobei es sich um ein Pulver eines Homopolymers und/oder Copolymers mit einer Wiederholungseinheitsstruktur der folgenden Formel (1) handelt: 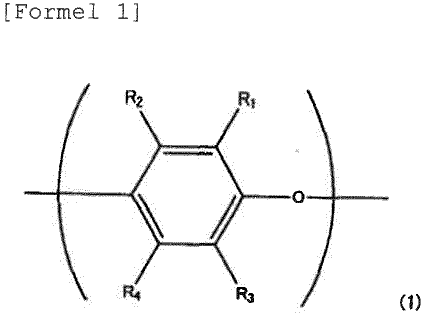
worin R₁, R₂, R₃ und R₄ jeweils unabhängig aus der Gruppe ausgewählt sind, die aus einem Wasserstoffatom, einem Halogenatom, einer Alkylgruppe mit 1 bis 7 Kohlenstoffatomen, einer Phenylgruppe, einer Halogenalkylgruppe, einer Aminoalkylgruppe, einer Kohlenwasserstoffoxygruppe und einer Halogenkohlenwasserstoffoxygruppe, worin ein Halogenatom durch mindestens zwei Kohlenstoffatome von einem Sauerstoffatom getrennt ist, besteht,
welches eine lose spezifische Schüttdichte von 0,40 oder mehr und 0,85 oder weniger aufweist und welches 5 bis 20 Massen-% einer Polyphenylenetherkomponente mit einem Molekulargewicht von 50000 oder mehr und 12 bis 30 Massen-% einer Polyphenylenetherkomponente mit einem Molekulargewicht von 8000 oder weniger aufweist, wobei die lose spezifische Schüttdichte mit einem Powder Tester gemessen wird und wobei die Quantifizierung der Polyphenylenetherkomponenten unter Verwendung einer Kalibrierkurve, die auf Standardstyrol bezogen ist und unter Verwendung von Gelpermeationschromatographie erstellt wurde, durchgeführt wird.

2. Polyphenylenetherpulver nach Anspruch 1, welches eine reduzierte Viskosität (ηsp/c), gemessen in einer 0,5 g/dl Chloroformlösung bei 30 °C, von 0,20 dl/g oder mehr und 0,43 dl/g oder weniger aufweist.

3. Polyphenylenetherharzzusammensetzung, umfassend:
(a) das Polyphenylenetherpulver nach Anspruch 1; und
(b) ein gutes Lösungsmittel für das Polyphenylenetherpulver.

4. Polyphenylenetherharzzusammensetzung nach Anspruch 3, worin das gute Lösungsmittel (b) ein oder mehrere Lösungsmittel ist/sind, ausgewählt aus der Gruppe, die aus aromatischen Kohlenwasserstoffen, halogenierten Kohlenwasserstoffen, Nitroverbindungen, aliphatischen Kohlenwasserstoffen und Ethern besteht.

5. Polyphenylenetherharzzusammensetzung nach Anspruch 3 oder 4, worin ein Massenverhältnis ((a)/(b)) des Polyphenylenetherpulvers (a) zu dem guten Lösungsmittel (b) 5/95 bis 60/40 ist.

6. 3. Polyphenylenetherharzzusammensetzung, umfassend:
(a) das Polyphenylenetherpulver nach Anspruch 1; und
(d) einen Füllstoff.

7. Polyphenylenetherharzzusammensetzung nach Anspruch 6, worin der Füllstoff (d) einer oder mehrere Füllstoffe ist/sind, ausgewählt aus der Gruppe, die aus Glasfasern, Metallfasern, anorganischen Salzen, Wollastonit, Kaolin, Talk, Calciumcarbonat, Siliciumdioxid und Titanoxid besteht.

8. Verfahren zur Herstellung des Polyphenylenetherpulvers nach Anspruch 1 oder 2, wobei das Verfahren die Schritte beinhaltet:
Schritt 1 des Gewinnens einer Lösung (I), die Polyphenylenether und ein gutes Lösungsmittel enthält, durch Polymerisieren einer Phenolverbindung, während Sauerstoff in Gegenwart eines Katalysators in das gute Lösungsmittel für den Polyphenylenether eingeführt wird;
Schritt 2 des Gewinnens einer Lösung (II) aus der in Schritt 1 erhaltenen Lösung (I), wobei die Konzentration des Polyphenylenethers auf 25 Massen-% oder mehr und 45 Massen-% oder weniger eingestellt wurde;
Schritt 3 des Gewinnen einer Aufschlämmung durch Mischen der in Schritt 2 erhaltenen Lösung (II) mit einem schlechten Lösungsmittel für den Polyphenylenether und Präzipitieren des Polyphenylenethers; und
Schritt 4 des Mahlens eines nassen Polyphenylenethers, der durch Unterziehen der in Schritt 3 erhaltenen Aufschlämmung einer Fest-flüssig-Trennung erhalten wurde, wobei
in Schritt 1 die eingeführte Sauerstoffmenge 20 to 30 NL pro Mol der Phenolverbindung ist und
in Schritt 3 die Polyphenylenetherkonzentration in der Aufschlämmung beim Präzipitieren des Polyphenylenethers 15 Massen-% oder mehr und 30 Massen-% oder weniger ist.

9. Verfahren zur Herstellung des Polyphenylenetherpulvers nach Anspruch 8, wobei in Schritt 3 eine Aufschlämmungstemperatur beim Präzipitieren des Polyphenylenethers 0°C oder mehr und 70°C oder weniger ist.

## Revendications

1. Poudre de polyphénylène éther qui est une poudre d'un homopolymère et/ou copolymère ayant une structure de motif répétitif représentée par la formule (1) suivante : 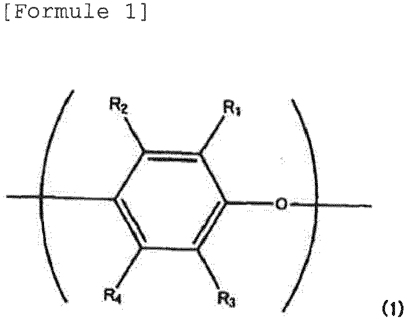
dans laquelle R₁, R₂, R₃ et R₄ sont chacun indépendamment choisis dans le groupe constitué d'un atome d'hydrogène, d'un atome d'halogène, d'un groupe alkyle comportant de 1 à 7 atomes de carbone, d'un groupe phényle, d'un groupe halogénoalkyle, d'un groupe aminoalkyle, d'un groupe hydrocarbure oxy et d'un groupe halogénohydrocarbure oxy dans lequel un atome d'halogène est séparé d'un atome d'oxygène par au moins deux atomes de carbone, qui a une densité relative apparente libérée supérieure ou égale à 0,40 et inférieure ou égale à 0,85, et qui comprend de 5 à 20% en masse d'un composant polyphénylène éther ayant un poids moléculaire supérieur ou égal à 50000 et de 12 à 30% en masse d'un composant polyphénylène éther ayant un poids moléculaire inférieur ou égal à 8000, dans laquelle la densité relative apparente libérée est mesurée à l'aide d'un testeur de poudre et dans laquelle
la quantification des composants polyphénylène éther est réalisée à l'aide d'une courbe d'étalonnage basée sur un polystyrène standard qui a été tracée à l'aide d'une chromatographie à perméation de gel.

2. Poudre de polyphénylène éther selon la revendication 1, qui a une viscosité réduite (ηsp/c) mesurée dans 0,5 g/dl d'une solution de chloroforme à 30 °C supérieure ou égale à 0,20 dl/g et inférieure ou égale à 0,43 dl/g.

3. Composition de résine de polyphénylène éther, comprenant :
(a) la poudre de polyphénylène éther selon la revendication 1 ; et
(b) un bon solvant pour la poudre de polyphénylène éther.

4. Composition de résine de polyphénylène éther selon la revendication 3, dans laquelle (b) le bon solvant est un ou plusieurs solvants choisis dans le groupe constitué des hydrocarbures aromatiques, des hydrocarbures halogénés, des composés nitro, des hydrocarbures aliphatiques et des éthers.

5. Composition de résine de polyphénylène éther selon la revendication 3 ou 4, dans laquelle un rapport massique ((a)/(b)) de (a) la poudre de polyphénylène éther à (b) le bon solvant est de 5/95 à 60/40.

6. Composition de résine de polyphénylène éther, comprenant :
(a) la poudre de polyphénylène éther selon la revendication 1 ; et
(d) une charge.

7. Composition de résine de polyphénylène éther selon la revendication 6, dans laquelle (d) la charge est une ou plusieurs charges choisies dans le groupe constitué des fibres de verre, des fibres de métaux, des sels inorganiques, de la wollastonite, du kaolin, du talc, du carbonate de calcium, de la silice et de l'oxyde de titane.

8. Procédé de production de la poudre de polyphénylène éther selon la revendication 1 ou 2, le procédé comprenant :
l'étape 1 consistant à obtenir une solution (I) incluant un polyphénylène éther et un bon solvant en polymérisant un composé phénol tout en introduisant de l'oxygène en présence d'un catalyseur dans le bon solvant pour le polyphénylène éther ;
l'étape 2 consistant à obtenir une solution (II) à partir de la solution (I) obtenue dans l'étape 1 dans lequel une concentration du polyphénylène éther a été ajustée à 25% en masse ou plus et à 45% en masse ou moins ;
l'étape 3 consistant à obtenir une suspension épaisse en mélangeant la solution (II) obtenue dans l'étape 2 avec un mauvais solvant pour le polyphénylène éther et en précipitant le polyphénylène éther ; et
l'étape 4 consistant à broyer un polyphénylène éther humide obtenu en soumettant la suspension épaisse obtenue dans l'étape 3 à une séparation solide-liquide, dans lequel
dans l'étape 1, une quantité d'oxygène introduite est de 20 à 30 NL par mol du composé phénol, et
dans l'étape 3, la concentration du polyphénylène éther dans la suspension épaisse lors de la précipitation du polyphénylène éther est supérieure ou égale à 15% en masse et inférieure ou égale à 30% en masse.

9. Procédé de production de la poudre de polyphénylène éther selon la revendication 8, dans lequel dans l'étape 3 une température de la suspension épaisse lors de la précipitation du polyphénylène éther est supérieure ou égale à 0 °C et inférieure ou égale à 70 °C.
